# EUROPEAN PATENT SPECIFICATION

(11) **EP 4 452 610 B1**
(45) Date of publication and mention of the grant of the patent: **04.02.2026**
(21) Application number: 22839910.1
(22) Date of filing: 13.12.2022
(51) Int. Cl.: B29D 30/06, B29C 48/29, B29C 48/37, B29C 48/385, B29C 48/395

(54) **PRODUCTION PROCESS AND PRODUCTION LINE OF A SELF-SEALING TYRE**
HERSTELLUNGSVERFAHREN UND PRODUKTIONSLINIE FÜR EINEN SELBSTDICHTENDEN REIFEN
PROCÉDÉ DE PRODUCTION ET CHAÎNE DE PRODUCTION D'UN PNEU AUTO-OBTURANT

(30) Priority: 20.12.2021 IT 202100031847
(43) Date of publication of application: 30.10.2024
(73) Proprietor: Pirelli Tyre S.p.A., 20126 Milano (IT)
(72) Inventor: PUPPI, Cristiano, 20126 Milano (IT); MONTEROSSO, Antonio, 20126 Milano (IT); CIANCIO, Antonio, 20126 Milano (IT); TESTI, Stefano, 20126 Milano (IT); SANGIOVANNI, Stefano, 20126 MILANO (IT)
(74) Representative: Tirloni, Bartolomeo
(86) International application number: PCT/IT2022/050325
(87) International publication number: WO 2023/119338

(56) References cited:
- WO-A1-2015/092574
- US-A1- 2011 213 050
- US-B2- 8 821 982

## Description

### Technical field of the invention

The present invention relates to a production process and a production line of a self-sealing tyre, in particular comprising a layer of sealing compound.

Self-sealing tyre means a tyre able to prevent the loss of air and the consequent deflation due to a puncture caused by sharpen objects (e.g., a nail or others).

Typically, a self-sealing tyre comprises at least one layer of sealing compound which can adhere to the external object inserted therein and can also flow into the hole when such external object is removed, thus sealing the hole itself, preventing or slowing the outflow of the air from the tyre. To this end, the sealing compound typically has soft (e.g., deformable) and sticky appearance during the operation of the tyre.

Typically, such layer of sealing compound is located in a radially inner position of the tyre, i.e., in a radial position proximal to, or directly facing, the inner cavity of the tyre. "Radial" means a direction (substantially) perpendicular to the rotation axis of the tyre. "Inner cavity" means the space delimited by the inner surface of the tyre and by the surface of the mounting rim which faces the inner surface of the tyre, when mounted. "Phr" (parts per hundred of rubbers) means parts by weight per 100 parts by weight of overall elastomeric base. For the calculation of 100 parts of overall elastomeric base, possible additives are not considered (such as possible elastomeric resins or extension oils).

"Continuous strip" means an elongated continuous element, with constant section, having the longitudinal dimension much (e.g., at least one order of magnitude) greater than the transversal dimensions.

"Sealing compound" means a finished compound, i.e., complete with all the components, included the cross-linking agent, wherein the components are homogenously distributed and dispersed together. Depending on the context, the expression "sealing compound" means the finished compound in any cross-linking/vulcanization state of the compound itself, for example before the cross-linking/vulcanization starts or when the cross-linking/vulcanization is complete or in any intermediate state. The sealing compound is ready for the incorporation in the tyre, preferably by a semi-finished product which is incorporated in the green tyre, so as to confer, once the cross-linking/vulcanization of the sealing compound is complete, the desired sealing properties during the operation of the finished tyre. For example, the sealing compound in the finished tyre (therefore completely cross-linked/vulcanized) has viscoelastic properties such that it can flow inside a perforation produced on the carcass structure by a sharp object and a stickiness such as to generate the drag force that is exerted thereon via adhesion with the moving sharp object (e.g., when the sharp object is expelled during the rolling of the tyre).

"Substantially free of cross-linking agent" means that a precursor compound of a sealing compound has a null amount of cross-linking agent, or in any case lower than 0.01 phr. Alternatively or in combination, an amount of cross-linking agent in the precursor compound is less than 0.5% of the overall amount of the cross-linking agent in the (final) sealing compound.

"Cross-linking agent" means a component able to carry out (in whole or in part) the cross-linking of the elastomeric components.

"Mixing device" generally indicates a continuous or batch mixing device, structured for receiving at least two components and homogeneously mixing them (at least by distributive mixing, and in some cases also dispersive mixing). The devices called static mixers able to mix different fluids, by the division and the recomposition of flows, without moving parts, are also considered "mixing devices".

"Continuous mixing device" indicates a mixing device suitable for receiving the components of an elastomeric compound continuously fed (except for the possible stop of the mixing device for maintenance, or modification of the recipe of the elastomeric compound), typically by a (controlled) metering device, and to subject them to mixing so as to obtain (possibly in more mixing phases) their homogenization, and suitable for a discharge with continuous flow of the compound. In the jargon of the sector of the mixer for elastomeric compounds, the continuous mixing device is sometimes indicated with the term "mixing extruder", which is here considered equivalent to "continuous mixing device", although in the preferred embodiments of the present invention the continuous mixing device does not necessarily discharge the compound externally by extrusion at the terminal end of the extruder itself, but rather delivers the compound to another device (e.g., gear pump). "Continuous mixing device" also means a static mixer or a single-screw extruder or an extruder with a plurality of any kind and/or combination of screws.

"Batch mixing device" means a mixing device suitable for being periodically fed with the components of the elastomeric compound in set amounts (batches) and for mixing them for a set time interval in order to obtain the elastomeric compound. At the end of the mixing phase, the obtained elastomeric compound is completely discharged from the mixing device in one-step.

### State of the art

WO2015/092574A1, of the same Applicant, discloses an apparatus, and a related method, for producing a sealing semi-finished product for the production of tyres. US8821982B2 discloses a method for producing a polymer-based sealer for tyres.

### Summary of the invention

In the context of the production of self-sealing tyres, the Applicant has faced the problem of creating a production process and a production line of self-sealing tyres that allows to satisfy even small-medium production needs of the final production site(s), while keeping low the initial investment for the purchase of, and/or the setting up/maintenance of, and/or the physical space occupied by, the necessary machinery in the final production site(s), while obtaining an effective and/or safe handling of the sealing compound (typically sticky and difficult to manage) as well as the desired properties of the sealing compound in the finished tyre, such properties remaining constant over time and consistent between the production batches.

The Applicant has perceived that dividing over time, and preferably even in space by means of different production sites, the realization of the sealing compound would have led to a solution of the industrial problem set out above.

More precisely, the Applicant has found that the aforesaid problem is effectively solved by a production process, and a related line, of self-sealing tyres in which, in a first phase (preferably carried out in a first production site), it is provided producing a precursor compound of the sealing compound without any cross-linking agent, and, in a second phase (preferably in the final production site, for example remote from the first production site), it is provided producing the sealing compound by separately feeding the precursor compound and the cross-linking agent of the precursor compound to a continuous mixing device, wherein, between the first and second phase, the precursor compound is casked and then extracted to feed the continuous mixing device.

In a first aspect the invention relates to a production process of a self-sealing tyre for vehicle wheels according to claim 1.

In a second aspect the invention relates to a production line of a self-sealing tyre for vehicle wheels according to claim 11.

The Applicant believes that the interposition of the casking (operation c)) and of the extraction of the precursor compound from the cask (operation d)) between the production phase of the precursor compound (substantially) free of cross-linking agent (operations a) and b)) and the production phase of the (final) sealing compound by incorporation of the cross-linking agent, allows to produce with scale economy a high quantity of precursor compound and therefore to produce a (numerically) consistent batch of casks containing such precursor compound, which can subsequently be used in the subsequent operations from d) to g), according to the production and/or logistic needs. For example, the operations from d) to g) can be performed in the same production site in which the operations from a) to c) were performed, even with very long temporal intervals between the production of the precursor compound and the production of the sealing compound.

Alternatively, or in combination with the above, the aforesaid features also allow to produce high quantities of precursor compound in a central production site and, following the casking of the precursor compound, to ship the casks to one or more peripheral production sites in which operations from d) to g) are performed. In particular, in the latter case, each peripheral production site therefore does not necessarily have to equip with the entire set of machinery necessary for the making of the sealing compound. For example, the first mixing device (e.g., a twin-screw extruder) is generally a very expensive machinery as it must deliver sufficient mixing power to mix the highly viscous components (such as the elastomeric component and the bonding resin) which require both dispersive mixing (i.e., mixing of two or more components, at least one of which is in the form of solid particles and at least one of which is in a fluid form, e.g., liquid or semi-liquid, that occurs by disintegration of the solid particles component into the fluid component) and distributive mixing (mixing of two or more, typically fluids, components until their homogenization). Thanks to the aforesaid features, this first mixing device can be provided only in the central production site and not in each peripheral production site. These peripheral production sites can in fact receive the casks of precursor compound already prepared (in the form of homogenized semi-finished product) and produce the sealing compound with the second mixing device, generally less expensive than the first mixing device as it only has to perform a distributive mixing of the precursor compound and of the cross-linking agent, which generally has a low viscosity. The substantial absence of cross-linking agent in the precursor compound makes the aforesaid operations of casking, subsequent extraction and metered feeding of the precursor compound industrially feasible.

The Applicant believes (after extensive experimental tests) that the precursor compound (substantially) free of cross-linking agent is a component highly stable over time from a chemical-physical point of view. This entails, on one hand, the possibility to extract the precursor compound from the casks with a flow substantially constant over time and in a repeatable way (from cask to cask), and on the other hand, the obtainment of constant over time and predictable (in terms of repeatability of the results) properties of the final sealing compound (after vulcanization).

In fact, the Applicant believes that the aging of the precursor compound in the casks (inside of which the precursor compound can also stay for long times, e.g., several days) does not substantially change the cross-linking degree of the final sealing compound and therefore its chemical-physical properties, including the sealing ones. The Applicant also believes that, due to the experimental tests carried out, the sealing compound complete of the cross-linking agent is not sufficiently stable to be casked and subsequently extracted to be used for the production of the finished tyre, since the cross-linking agent is a highly unstable component which, during the casking period, reacts with the other components of the sealing compound. In particular, when the mass of compound in each cask is high (e.g., over 100 kg, for example 200 kg per cask) and the comound is casked at high temperatures (at the output from the first mixing device, the mixture is typically around 100-120°C), the subsequent cooling of the compound takes place slowly (up to a few days), thus (at least partially) triggering the cross-linking. This causes unpredictable variability (both from cask to cask and over time) in the properties of the sealing compound, both in terms of the viscoelastic and/or rheostatic properties of the sealing compound upon extraction from the casks, and in terms of the cross-linking degree of the final sealing compound. For example, the Applicant has observed that the extraction from the casks of the complete sealing compound is industrially unacceptable as the extraction flow varies from cask to cask and over time in a poorly contrallable way.

According to the Applicant, the introduction of the precursor compound inside the casks also allows the spatial confinement of the precursor compound (generally sticky and difficult to handle) in all the phases of the process of the present invention, thus allowing the handling and processing of the precursor compound itself.

In conclusion, the substantial absence of cross-linking agent in the precursor compound synergistically cooperates with the remaining features of the aforesaid process, including the aforesaid casking, to solve the aforesaid problem.

The present invention in one or more of the aforesaid aspcets can have one or more of the following preferred features.

Preferably a quantity of said precursor compound in said cask is greater than or equal to 50 kg, more preferably greater than or equal to 100 kg.

Preferably, subsequently to said operation g), it is provided extruding said sealing compound for obtaining a continuous strip of the sealing compound.

Preferably said second plant comprises an extrusion head placed downstream of said second mixing device for extruding said sealing compound and obtaining a continuous strip of the sealing compound.

Preferably obtaining said continuous strip of the sealing compound comprises continuously feeding the sealing compound from said second mixing device directly to a gear pump.

Preferably said second plant comprises a gear pump placed downstream of, and coupled directly and with structural continuity to, said second mixing device.

Preferably obtaining said continuous strip of the sealing compound comprises continuously feeding the sealing compound from said gear pump directly to an extrusion head, so as to obtain in output from said extrusion head said continuous strip of the sealing compound, more preferably having set transversal dimensions.

Preferably said extrusion head is placed downstream of, and coupled directly and with structural continuity to, said gear pump.

Preferably, subsequently to said extruding said sealing compound, it is provided applying a service film to a first face of the continuous strip. In this way the handling of the sealing compound is allowed.

Preferably, subsequently to said extruding said sealing compound, it is provided applying a, more preferably self-supporting, e.g., made of thermoplastic and/or elastomeric material, structural film to a second face of the continuous strip opposite to said first face.

Preferably, subsequently to said extruding said sealing compound, it is provided applying a first and a second elongated element (i.e., thin strips) made of an elastomeric compound at respective opposite side of said continuous strip, each of said first and second elongated element developing from said service film to said structural film. In this way it is possible to totally confine said continuos strip.

Preferably it is provided winding said continuous strip together with said service film, said structural film and said first and second elongated element on a collection reel.

Preferably said second plant comprises, downstream of said extrusion head, a conveying device (e.g., a conveyor belt) for receiving said continuous strip and transporting it away from the extrusion head.

Preferably said second plant comprises, downstream of said extrusion head, a first reel on which a service film is wound, the first reel being able to continuously unwind said service film on the conveying device so that said continuous strip in output from the extrusion head lays on said service film.

Preferably said second plant comprises, downstream of said extrusion head, a second reel on which a structural film is wound, the second reel being able to continuously unwind said structural film on the conveying device so that said structural film adheres to said continuous strip on the opposite side with respect to said service film. Preferably said second plant comprises, downstream of said extrusion head, a third reel and a fourth reel on which a first and a second elongated element made of an elastomeric compound are respectively wound, the third reel and fourth reel being able to continuously unwind respectively said first and second elongated element on the conveying device so that each of said first and second elongated element at least partially adheres to said continuous strip on mutually opposite sides of said continuous strip.

Preferably said second plant comprises, downstream of said extrusion head, a collection station placed downstream of the conveying device and configured to wound said continuous strip (together with said service film, said structural film and said first and second elongated element) on a collection reel.

Preferably, subsequently to said extruding, it is provided cooling said continuous strip, more preferably together with said service film, said structural film and said first and second elongated element.

Preferably the second plant comprises, downstream of said extrusion head, cooling means for cooling said continuous strip, more preferably together with said service film, said structural film and said first and second elongated element, between said extrusion head and said collection station.

Preferably it is provided cutting at length said continuous strip, more preferably together with said service film, said structural film and said first and second elongated element, for making a semi-finished product.

Preferably building said green tyre comprises incorporating said semi-finished product in the green tyre, more preferably in a radially inner position of the green tyre, for obtaining, after said moulding and vulcanizing, said layer of sealing compound in said self-sealing tyre.

Preferably, before incorporating said semi-finished product, it is provided separating said service film from said sealing compound.

Preferably said first plant is located in a first production site and said second plant is located in a second production site different, more preferably geographically far away, from said first production site.

Preferably it is provided carrying out said operations from a) to c) in a first production site and carrying out said operations from d) to g) in a second production site different (and preferably geographically far away) from said first production site.

Preferably, subsequently to said introducing said precursor compound into said cask and before said extracting said precursor compound from said cask, it is provided stocking said cask and/or cooling down said precursor compound in said cask and/or transporting said cask from said first to said second production site.

Preferably said mixing said first elastomeric component and said bonding resin in said first (and/or third, see below) mixing device occurs for distributive mixing and for dispersive mixing.

Preferably said mixing said precursor compound and said cross-linking agent in said second mixing device occurs for distributive mixing.

Preferably said first mixing device is continuous.

Preferably the second (and third, see below) mixing device, and also the first mixing device when continuous, comprise a respective inner chamber inside of which typically one endless screw or a plurality of screws rotates.

Preferably the first (and/or third, see below) continuous mixing device (to which a high mixing speed is normally requested) is typically equipped with mixing portions able to give to the elastomeric component a high shear stress, with possible redistribution portions, and also with conveying portions (e.g., elicoidal screws) able to put in thrust the processed compound along the inner chamber.

Preferably said first (and/or third, see below) mixing device is of the type comprising at least two co-rotating or counter-rotating screws housed in the inner chamber, more preferably said first (and/or third, see below) mixing device is a twin-screw extruder with at least partially penetrating co-rotating screws.

In one alternative embodiment said first (and/or third, see below) mixing device is selected in the group: continuous mixing device of the type with planetary rollers (spindles), ring extruder with multiple screws (e.g., with six or more screws), a kneader with oscillating screw Ko-Kneader^{™} Buss^{™}, or a long continuous mixer (LCM) and twin-screw conical mixer.

In one alternative embodiment said first mixing device is a batch mixing device, for example selected in the group: open mixer of the "open-mill" type, internal mixer with tangential rotors (Banbury^{™}) or with penetrating rotors (Intermix^{™}).

Preferably said first pump is a plate pressure pump, more preferably comprising a plate and a feeding duct.

Preferably said plate is movable (by an actuator, e.g., with hydraulic pistons) and structured for hermetically sealing said cask and, following a vertical downward movement, for pressing said precursor compound for extracting it from said cask through one or more openings at a lower face of said plate.

Preferably said feeding duct is connected to said one or more openings of the plate for receiving said precursor compound extracted from said cask and sending said precursor compound to said first metering device of the precursor compound. Preferably said second mixing device is a single-screw extruder, more preferably with (entirely) helical screw

Preferably said mixing said precursor compound and said cross-linking agent in said single-screw extruder comprises generating a back-flow at an end portion near to an outlet mouth of said single-screw extruder. The Applicant believes that, albeit the single-screw extruder is typically a device which transports the material introducing a low mixing, the two components, thanks to the back-flow, are sufficiently distributed one in the other at the output of the single-screw extruder.

In one alternative embodiment, said second mixing device is a static mixer and the second plant comprises a respective gear pump placed upstream of, and coupled directly and with structural continuity to, the static mixer. In this way, the feeding of the precursor compound and of the cross-linking agent takes place directly at the respective gear pump, while the (distributive) mixing of the precursor compound and of the cross-linking agent takes place in the static mixer, which receives in input the components kept in thrust by the respective gear pump.

Preferably, during said extracting said precursor compound from said cask, a temperature of said plate is greater than or equal to 140°C, more preferably greater than or equal to 160°C, and/or less than or equal to 220°C, more preferably less than or equal to 200°C. In this way the extraction of the precursor compound from the cask is facilitated.

Preferably, during said extracting said precursor compound from said cask, said cask is kept at room temperature.

Preferably, during said extracting said precursor compound from said cask, said plate is subjected to a pressure force greater than or equal to (about) 50kN, more preferably greater than or equal to (about) 60kN, even more preferably greater than or equal to (about) 70 kN, and less than or equal to (about) 120 kN, more preferably less than or equal to (about) 110kN, even more preferably less than or equal to (about) 100 kN. The Applicant believes that, performed many experimental tests, such pressure forces and such temperatures allow (thanks also to the absence of the cross-linking agent) a regular extraction of the precursor compound from the cask even with the casks at room temperature (with considerable advantages in terms of both process times, as the heating of the casks typically requires long times, even in the order of few days, and safety of the plant). In particular, the machinery for the heating of the casks, such as for example cask-warming containers, are expensive, bulky and require a high energy consumption, and it is also necessary to provide a large number of such machinery for each production line.

Preferably, during said extracting said precursor compound, it is provided heating said feeding duct of said plate pressure pump to a temperature greater than or equal to 100°C and/or less than or equal to 140°C. The Applicant believes that this favours the extraction of the compound in terms of obtainable flow and its regularity.

Preferably said first elastomeric component is a (unsaturated) styrene thermoplastic elastomer or a diene elastomer.

Preferably said styrene thermoplastic elastomer is selected among: styrene/butadiene/styrene (SBS) block-copolymer, styrene/isoprene/styrene (SIS) block-copolymer, styrene/butadiene/isoprene/styrene (SBIS) block copolymer, and mixtures thereof, optionally comprising also the corresponding di-block thermoplastic elastomers, such as styrene-butadiene (SB) and styrene-isoprene (SI).

Preferably said sealing compound comprises an amount of said styrene thermoplastic elastomer greater than or equal to 20 phr, more preferably greater than or equal to 40 phr, and/or less than or equal to 100 phr, more preferably less than or equal to 80 phr. Preferably said diene elastomer is selected among: cis-1,4-polyisoprene (natural or synthetic rubber, preferably natural rubber), 3,4-polyisoprene, polybutadiene, isoprene/isobutene copolymers, that are possibly halogenated, 1,3-butadiene/acrylonitrile copolymer, styrene/1,3-butadiene copolymer, styrene/isoprene/1,3-butadiene copolymer, styrene/1,3-butadiene/acrylonitrile copolymer, or mixtures thereof.

Preferably said sealing compound comprises an amount of said diene elastomer less than or equal to 100 phr, more preferably less than or equal to 80 phr, even more preferably less than or equal to 60 phr.

In one embodiment said sealing compound comprises said styrene thermoplastic elastomer and said diene elastomer.

Preferably said bonding resin is selected from: hydrocarbon resins, phenolic-based resins (e.g., alkylphenol-formaldehyde-based resins, alkylphenol-acetylene-based resins, alkylphenol and terpene-phenol modified resins), carbon-based resins (e.g., coumarone-indene resins), xylene-based resins (e.g., xylene-formaldehyde resins), alkyl resins and natural resins (e.g., such as rosin-based resins or terpene-based resins), or mixtures thereof.

Preferably said sealing compound comprises an amount of said bonding resin greater than or equal to 20 phr, more preferably greater than or equal to 30 phr, and/or less than or equal to 200 phr, more preferably less than or equal to 150 phr.

Preferably said cross-linking agent is a peroxide, more preferably an organic peroxide. Preferably said organic peroxide is selected from: dicumyl peroxide (DCP), 2,5-dimethyl-2,5-di(t.butyl-peroxy)hexane (DBPH), bis-(2,4-dichlorobenzoyl) peroxide (DCBP), di-t.butyl-peroxide.

In one embodiment said cross-linking agent, during said continuously feeding, is in liquid form, more preferably said bonding agent is (homogenously) dissolved in a liquid solvent (e.g., an oil).

In one embodiment said cross-linking agent is continuously fed in pulviscular form, wherein the bonding agent is distributed on a carrier, e.g., on the surface of solid particles made of inert material.

Preferably said sealing compound comprises an amount of said cross-linking agent greater than or equal to 0.1 phr, more preferably greater than or equal to 0.5 phr, and/or less than or equal to 6 phr, more preferably less than or equal to 4 phr. The cross-linking agent allows the chemical cross-linking of the sealing layer during the vulcanization of the tyre for improving the dynamic sealing properties of the sealing layer.

The invention relates to a production process of a first batch of self-sealing tyres and of a second batch of further self-sealing tyres, comprising:
- producing said first batch of self-sealing tyres according to any embodiment of the production process of a self-sealing tyre for vehicle wheels according to the first aspect of the invention, wherein said operations from a) to c) are carried out in said first plant and said operations from d) to g) are carried out in said second plant; and
- subsequently, producing said second batch of further self-sealing tyres.

Preferably producing said second batch of further self-sealing tyres comprises, in said second production site, producing a further sealing compound comprising at least said first elastomeric component, at least said bonding resin and said cross-linking agent. Typically, the components of the further sealing compound (and their amounts) are the same as those of the sealing compound.

Preferably producing said second batch of further self-sealing tyres comprises, in said second production site, building a further green tyre.

Preferably producing said second batch of further self-sealing tyres comprises, in said second production site, moulding and vulcanizing said further green tyre for obtaining said further self-sealing tyre comprising a layer of said further sealing compound. Preferably producing said further sealing compound comprises continuously feeding said first elastomeric component, said bonding resin and said cross-linking agent to a third mixing device, said third mixing device being continuous.

Preferably producing said further sealing compound comprises mixing said first elastomeric component, said bonding resin and said cross-linking agent in said third mixing device for producing said further sealing compound.

Preferably it is provided producing a continuous strip of the further sealing compound.

Preferably producing said continuous strip of the further sealing compound comprises continuously feeding the further sealing compound from the third mixing device directly to a buffer device placed downstream of, and coupled with structural continuity to, said third mixing device.

Preferably producing said continuous strip of the further sealing compound comprises continuously feeding the further sealing compound from the buffer device to a further gear pump placed downstream of, and coupled with structural continuity to, said buffer device.

Preferably producing said continuous strip of the further sealing compound comprises continuously feeding the further sealing compound from the further gear pump to a further extrusion head placed downstream of, and coupled with structural continuity to, said further gear pump, so as to obtain in output from said further extrusion head said continuous strip of the further sealing compound, more preferably having set transversal dimensions.

The Applicant believes that in the event that the production request increases in the second production site, it is possible to update the production line in the second production site in order to fully produce the sealing compound in such site.

Preferably said buffer device coincides with said second mixing device and/or said further gear pump coincides with said gear pump and/or said further extrusion head coincides with said extrusion head. In this way, in the updated production line in the second site, one or more machinery already present are used, with consequent economic saving.

### Brief description of the drawings

figure 1 schematically shows a partial section of a sealing tyre;
figure 2 schematically and partially shows a production line according to the present invention;
figure 3 schematically and partially shows a first plant of the production line according to the present invention;
figure 4 schematically shows a first part of a second plant of the production line according to the present invention;
figure 5 schematically shows a second part of a second plant of the production line according to the present invention;
figure 6 schematically and partially shows a semi-finished product comprising the sealing compound; and

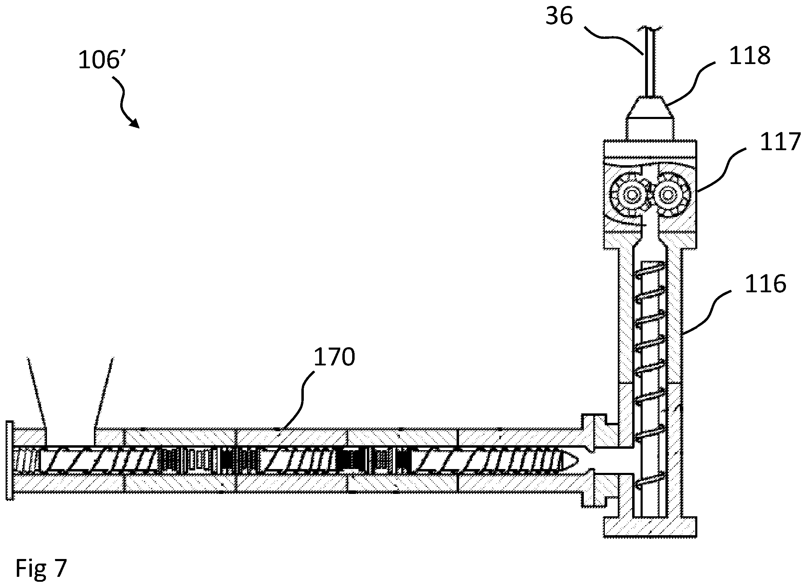

figure 7 schematically and partially shows an updated production line according to the present invention.

### Detailed description of some embodiments of the invention

The features and the advantages of the present invention will be further clarified by the following detailed description of some embodiments of the present invention, presented by way of non-limiting example, with reference to the attached figures.

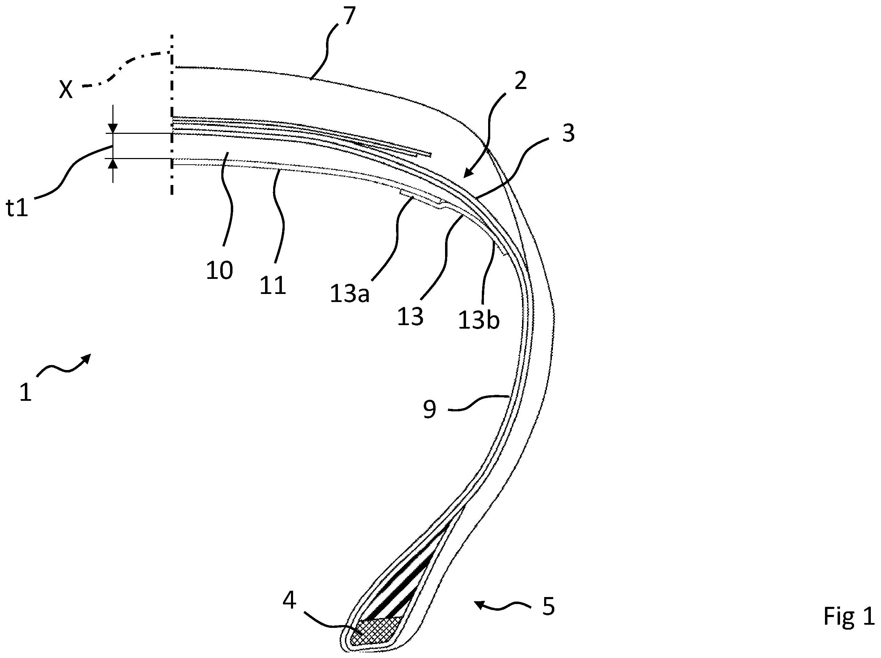

In figure 1 with reference number 1 a self-sealing tyre for vehicle wheels is indicated, which typically comprises a carcass structure 2 comprising at least one carcass ply 3 having respectively opposite end flaps engaged with respective annular anchoring structures 4 integrated in the "heel" zones 5. In a radially outer position to the carcass structure, a tread band 7 made of an elastomeric compound is applied. In a radially inner position with respect to the carcass 2, it is also preferably provided a layer 9 of substantially air-impermeable elastomeric material, called "liner".

In the embodiment shown in figure 1 the self-sealing tyre 1 is of the type for motor vehicles, however the present invention also finds application to tyres for heavy vehicles or motorcycles.

The self-sealing tyre 1 also comprises a layer of sealing compound 10 exemplarily arranged in a radially inner position with respect to the liner and at the tread band 7. The layer of sealing compound 10 extends along the overall circumferential development of the tyre 1 and has for example a maximum thickness t1 greater than or equal to about 2.5 mm and less than or equal to 6 mm.

The sealing compound 10 exemplarily comprises a styrene thermoplastic elastomer, exemplarily a styrene/isoprene/styrene block-copolymer or mixtures of one or more styrene thermoplastic elastomers containing at least 50% of styrene/isoprene/styrene block-copolymer.

Particularly preferred are styrene/isoprene/styrene block-copolymers with a styrene content greater than or equal to 14% and less than or equal to 20%. Such copolymers are for example marketed under the name of Europrene^{®} SOL T190, T9133 by Polimeri Europa, Vector^{®} 4113, 4114 by Dexco Polymers, Kraton^{®} D1111, D1112 and D1107J by Kraton.

Exempalrily the sealing compound 10 comprises an amount of styrene thermoplastic elastomer equal to about 40 phr.

The sealing compound 10 exemplarily further comprises a diene elastomer, exemplarily cis-1,4-polyisoprene (natural rubber), 3,4-polyisoprene or polybutadiene.

Exemplarily the sealing compound 10 comprises an amount of diene elastomer equal to about 60 phr.

The sealing compound 10 comprises a bonding resin, exemplarily selected from hydrocarbon resins. Typically, the hydrocarbon resins used have average numerical molecular weight in the range of several hundreds to several thousands, and provide stickiness to the compound when the resin is mixed with natural or synthetic rubber. Examples of commercial hydrocarbon resin products are aromatic petroleum resins such as PETCOAL manufactured by Tosoh Co., Ltd.; C5/C9 hydrocarbon resins such as PETROTACK manufactured by Tosoh Co.; C5 hydrocarbon resins such as Escorez^{®} 1102 (manufactured by ExxonMobil).

Exemplarily the sealing compound 10 comprises an amount of bonding resin equal to about 40 phr.

The sealing compound 10 comprises a cross-linking agent, exemplarily an organic peroxide. Particularly preferred is 2,5-dimethyl-2,5-di(t.butyl-peroxy)-hexane (DBPH). A specific example of usable DBPH is a mixture of 45% of DBPH with calcium carbonate and silica marketed under the name Luperox 101 XL45 by Arkema. Exemplarily the sealing compound 10 comprises an amount of peroxide equal to about 1 phr.

In one alternative embodiment, the cross-linking agent is a sulfur-based compound exemplarily selected from: elemental sulfur, thiurams (e.g., such as tetraisobutyl thiuram disulfide or tetrabenzyl thiurame disulfide), dithiophosphates (e.g., such as zinc dibutyldithiophosphate), dithiocarbamates (e.g., such as zinc dimethyl dithiocarbamate). Typically, said sulfur-based compound is used together with zinc oxide (ZnO) or compounds containing zinc, fatty acids and sulfenamides (e.g., such as N-t.butyl-2-benzothiazyl sulfenamide (TBBS) or N-cyclohexyl-2-benzothiazyl sulfenamide (CBS)) or thiazoles (e.g., such as 2,2'-dithiobis-(benzothiazole) (MBTS)).

Preferably said sealing compound further comprises a plasticizer, preferably selected from the group: paraffinic oils, naphthenic oils, aromatic oils, liquid polymers (having low molecular weight), or combinations thereof. Preferably said sealing compound comprises an amount of said plasticizer greater than or equal to 10 phr, preferably greater than or equal to 20 phr, and less than or equal to 200 phr, preferably less than or equal to 60 phr.

Exemplarily the sealing compound 10 comprises a paraffinic oil as plasticizer, for example in an amount equal to about 40 phr.

Preferably said sealing compound comprises a reinforcing filler, preferably selected from: carbon black, silica, alumina, aluminosilicates, calcium carbonate, kaolin or mixtures thereof. Preferably said sealing compound comprises an amount of said reinforcing filler greater than or equal to 1 phr, preferably greater than or equal to 5 phr, and less than or equal to 40 phr, preferably less than or equal to 30 phr.

Exemplarily the sealing compound 10 comprises carbon black as reinforcing filler, for example in an amount equal to about 15 phr.

Preferably said sealing compound also comprises a peptizer (e.g., a sulfur-based organic compound which prevents the reconstruction of the molecular chains of the natural rubber and/or of some synthetic rubbers, broken during the processing), preferably selected from: phenylenedibenzamides (e.g., N,N'-dithiodi-o-phenylenedibenzamide), thio-b-naphthol, di-o-tolyl-guanidine, di-phenyl-guanidine, zinc laurate. Preferably said sealing compound comprises an amount of said peptizer greater than or equal to 0.05 phr and less than or equal to 5 phr, for example equal to about 2.5 phr.

Exemplarily the sealing compound 10 comprises N,N'-dithiodi-o-phenylenedibenzamide as peptizer, for example in an amount equal to about 0.5 phr.

Preferably said sealing compound comprises an amount of said crosslinking agent greater than or equal to 0.1 phr, preferably greater than or equal to 0.5 phr, and less than or equal to 6 phr, preferably less than or equal to 4 phr.

Preferably said sealing compound 10 comprises at least one extender oil.

In a radially inner position with respect to the layer of sealing compound 10 and in direct contact with the layer of sealing compound 10, a structural film 11 is arranged, exemplarily self-supporting and made of one of: thermoplastic polyurethane (TPU), polyamide (e.g., Nylon), polyester (e.g., PET). Exemplarily the structural film 11 extends for the overall circumferential development of the tyre 1 (to cover the layer of sealing compound 10) and has a width, i.e., a transversal extension, smaller than the transversal extension of the layer of sealing compound 10.

At each circumferential edge of the layer of sealing compound 10, there are a first and a second elongated element made of elastomeric material (in figure 1 only one of these elongated elements is shown, for example the first elongated element 13). Typically, the portion 13a of the first (and second) elongated element 13 closest to the median plane X of the tyre 1 is partly superimposed on the structural film 11 (on the opposite side with respect to the layer of sealing compound 10) and partly in contact with the layer of sealing compound 10. The portion 13b of the first (and second) elongated element 13 most distal from the median plane X lies in direct contact with the liner 9.

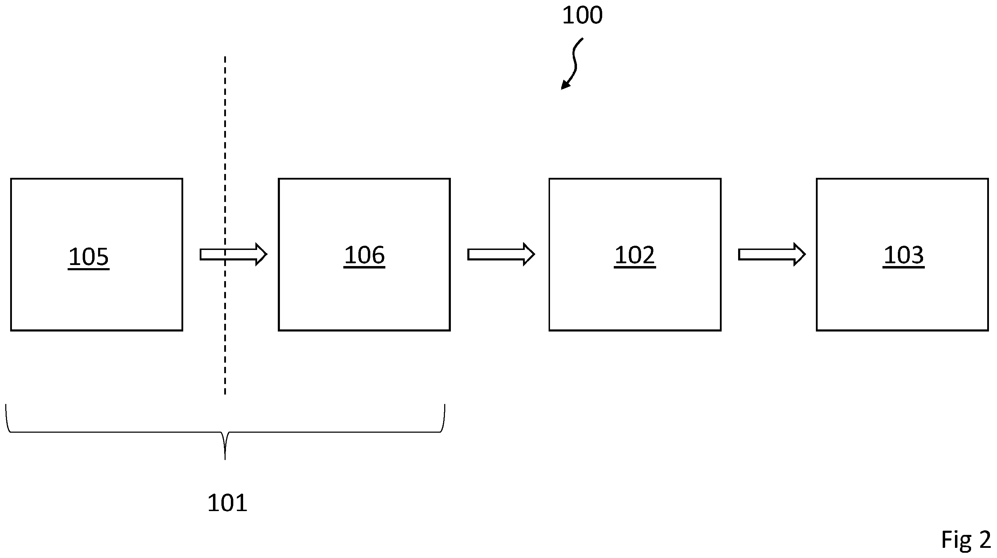

With reference to figure 2, a production line 100 of a self-sealing tyre 1 according to the present invention is schematically and partially shown. Through the production line 100, it is possible to implement a production process of a self-sealing tyre 1 according to the present invention.

The production line 100 comprises: a production station 101 of the sealing compound 10, a building station 102 of a green tyre, and a molding and vulcanization station 103 of the green tyre to obtain the self-sealing tyre 1 comprising the layer of sealing compound 10.

The station 101 comprises a first plant 105 and a second plant 106, wherein the first plant 105 is exemplarily located in a first production site and the second plant 106 is located in a second production site which is different and exemplarily geographically remote (as schematically indicated by the dashed line in figure 2) from the first production site. Typically, the building station 102 and the moulding and vulcanization station 103 are also located in the second production site.

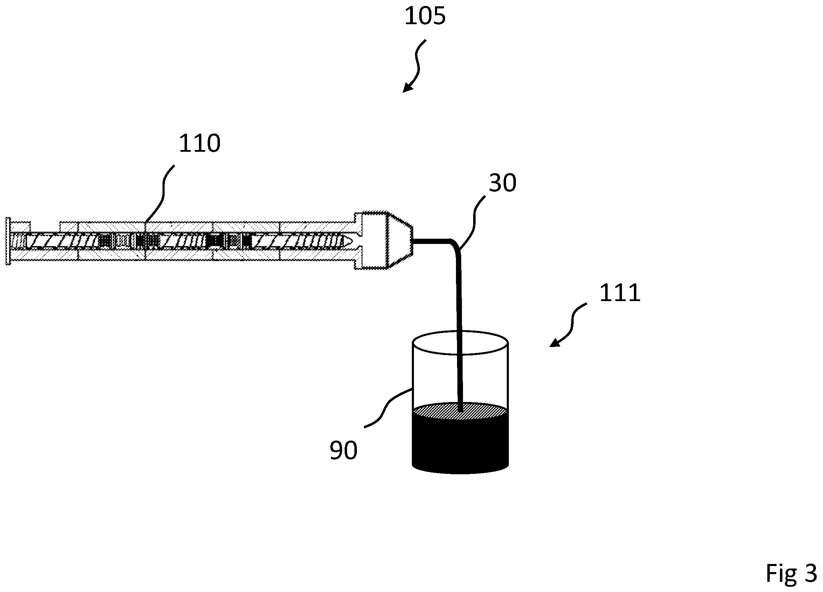

With reference to figure 3, the first plant 105 is schematically shown in which a precursor compound 30 of the sealing compound 10 is produced.

The first plant 105 comprises a first continuous mixing device 110, exemplarily a continuous twin-screw extruder with penetrating co-rotating screws. This extruder is suitable for continuously receiving and mixing, exemplarily by both distributive mixing and by dispersive mixing, the styrenic elastomer, the diene elastomer and the bonding resin to produce the precursor compound 30. Exemplarily, the first mixing device 110 receives and mixes also the extender oil, the plasticizer, the reinforcing filler, and the peptizer, along with the aforesaid components of the precursor compound 30. Exemplarily the first mixing device 110 is a Maris^{™} TM58HT co-rotating twin-screw mixing extruder, having a diameter equal to 70mm and a ratio between length L and diameter D equal to L/D=56. The working conditions of the twin-screw mixer 110 are for example: rotation speed of the screws 350rpm, pressure equal to 10bar.

Exemplarily the first mixing device 110 comprises one or more feeding mouths (not shown), for example distributed along the main development direction (which defines the flow direction) for the separate feeding of one or more components. The feeding of the components to the first mixing device 110 typically occurs through a continuous metering system (not shown), placed upstream of the first mixing device 110.

The first plant 105 comprises also a casking station 111 for introducing the precursor compound 30 into a cask 90. The term cask includes any container (e.g., barrel, tin, etc.), of any shape and size (e.g., capacity equal to 200 kg of compound), typically equipped with a sealing lid, suitable for containing the precursor compound, which is typically hot at first.

Exemplarily the precursor compound 30 in output from an outlet mouth of the first mixing device 110 is directly casked by gravity in the casks 90. Subsequently, the casks 90 are stored, for example in a warehouse of the first production site, in which typically, the precursor compound 30 is cooled given that, at the output from the first mixing device 110, the precursor compound is typically at a temperature of about 120°C. Subsequently, the casks 90 are transported from the first to the second production site, wherein the second plant 106, the building station 102 and the moulding and vulcanization station 103 are exemplarily located.

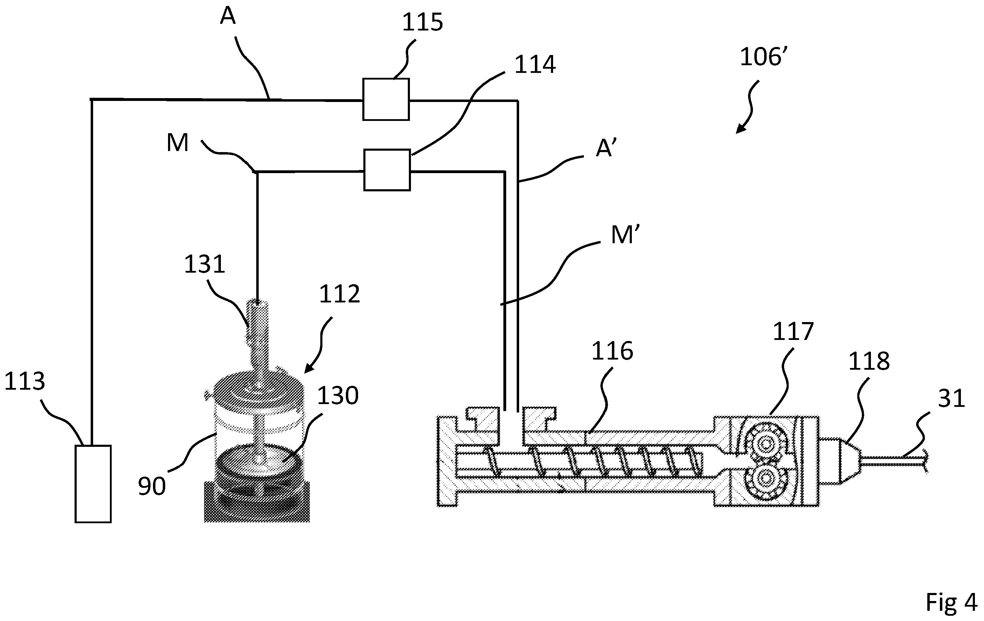

With reference to figure 4, a first part 106' of the second plant 106 for producing a continuous strip 31 of the sealing compound 10 is schematically shown.

The second plant 106 comprises one (or, not shown, more than one) first feeding pump 112 structured to extract the precursor compound 30 from the cask 90 (exemplarily positioned on a base support of the first pump). For example, the first pump 112 is a plate pressure pump comprising a plate 130 movable by an actuator (not shown), e.g., with hydraulic or pneumatic pistons. In use, the plate 130 hermetically seals the cask 90 and, following vertical downward movement, presses the precursor compound 30 to extract it from the cask 90 through openings at the lower face of the plate 130. The plate pressure pump further comprises a feeding duct 131 connected to the openings of the plate 130 for receiving the precursor compound 30 extracted from the cask 90 and sending the precursor compound (e.g., via a fluid communication line M, e.g., a pipe) to a first metering device 114 of the precursor compound 30.

Exemplarily the openings of the plate 130 are made of a distributed series of channels which develop along the overall vertical development direction of the plate 130. In other words, each channel comprises a first mouth facing the lower face of the plate and a second mouth facing the upper face of the plate. In this way it is possible to simplify the extraction of the precursor compound from the cask since the distributed series of channels creates passage ducts to convey a large quantity of precursor compound inside the feeding duct 131.

Exemplarily during the extraction of the precursor compound 30 from the cask 90: the cask 90 is kept for example at room temperature, the temperature of the plate 130 is for example equal to about 180°C, the plate 130 is subjected to a thrust force for example equal to about 80 kN, and the temperature of the feeding duct 131 is for example equal to about 120°C. The Applicant believes that these conditions favor a high extraction efficiency of the precursor compound from the cask, ensuring at the same time process rapidity and simplicity.

The second plant 106 further comprises a second feeding pump 113 (e.g., a rotary pump) structured to extract the cross-linking agent from a container (not shown). Exemplarily the cross-linking agent is homogeneously dissolved in a liquid solvent (e.g., an oil) to facilitate its metering.

Exemplarily the second feeding pump 113, through a respective fluid line A, e.g., a pipe, sends the cross-linking agent to a second metering device 115 of the cross-linking agent.

The first metering device 114 and the second metering device 115 exemplary are spiral or screw volumetric dispenser or gear pumps which respectively control the feeding rate of the precursor compound 30 and of the cross-linking agent. Exemplarily the feeding rate of the precursor compound 30 is kept constant and greater than or equal to 20 kg/h and less than or equal to 80 kg/h, for example equal to about 40 kg/h. Exemplarily the feeding rate of the cross-linking agent is kept constant and greater than or equal to 0.05 kg/h and less than or equal to 1 kg/h, for example equal to about 0.4 kg/h.

The second plant 106 further comprises a second continuous mixing device 116 structured to receive (from a respective feeding line M' and A', e.g., a respective pipe) the respective feeding rate of the precursor compound 30 and of the cross-linking agent.

Exemplarily the second mixing device 116 is a single-screw extruder exemplarily with entirely helical screw, such as the one with Maris^{™} brand, having diameter equal to 120mm and ratio between length (L) and diameter (D) equal to L/D=10. The working conditions of the single-screw extruder 116 are for example: rotation speed of the screws 50rpm, pressure 10bar.

Exemplarily the second mixing device 116 comprises a feeding mouth at the upstream end for the feeding of the precursor compound 30, and more downstream (not shown) a feeding mouth for the cross-linking agent.

The second mixing device 116 is structured to mix, e.g., by distributive mixing, the precursor compound 30 and the cross-linking agent to obtain the sealing compound 10. It is exemplarily provided to generate a back- flow at an end portion at an outlet mouth of the single-screw extruder, for example by pushing the compound downstream with a flow rate greater than the flow rate of the gear pump. The material therefore tends to flow partly backwards towards the feeding mouth, thus mixing with the new material that arrives.

Exemplarily the second plant 106 comprises a gear pump 117 placed downstream of, and coupled directly and with structural continuity to, the second mixing device 116. Typically, the gear pump comprises a respective inner chamber and a gear system housed in the respective inner chamber. Exemplarily the inner chambers of the second mixing device 116 and of the gear pump 117 are physically connected without solution of continuity (e.g., substantially with no outlet in the outer environment). For example, the gear pump 117 can be of the type marketed under the Maag^{™} brand having diameter of the gears equal to 50 mm. The working conditions of the gear pump are for example: rotation speed of the gears 25rpm, output pressure 80bar.

Exemplarily the second plant 106 comprises an extrusion head 118 placed downstream of, and coupled directly and with structural continuity to, the gear pump 117. The extrusion head exemplarily is a thermostatically controlled flat head.

In use, the sealing compound in output from the second mixing device 116 is continuously fed from the second mixing device 116 directly to the gear pump 117, and subsequently from the gear pump 117 directly to the extrusion head 118, so as to obtain in output from the extrusion head the continuous strip 31 of the sealing compound 10 with set transversal dimensions. Exemplarily the sealing compound in output from the extrusion head 118 is at a temperature equal to about 110°C.

Exemplarily the continuous strip 31 has a trapezoidal profile, taken along the cross section, having two bases with much higher length (e.g., about 200 mm) than the height (exemplarily equal to about 5 mm).

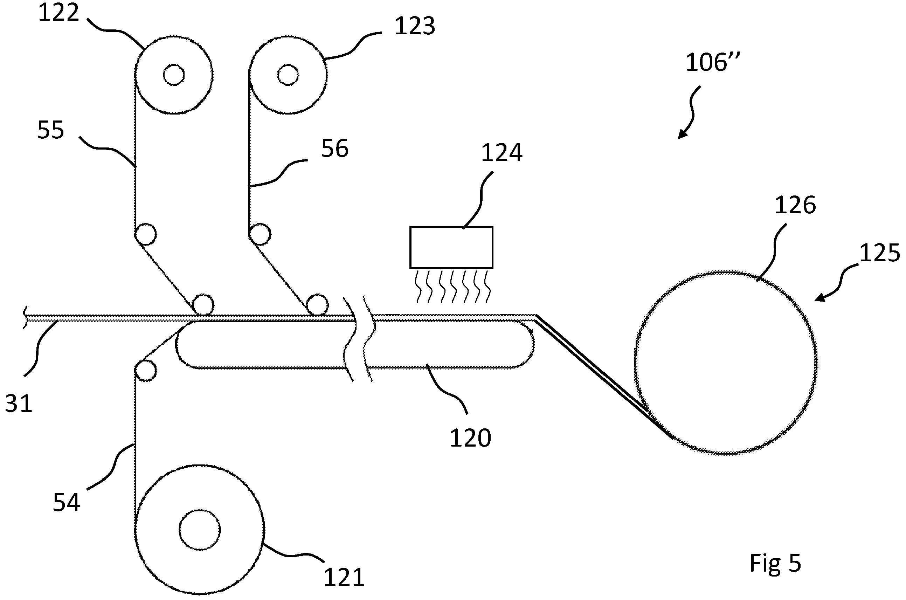

With reference to figure 5, a second part 106" of the second plant 106 positioned downstream of the extrusion head 118 is shown.

Exemplarily the second plant 106 comprises a conveyor belt 120 which receives from the extrusion head 118 the continuous strip 31 and transports it away from the extrusion head 118.

Exemplarily the second system 106 comprises a first reel 121 on which a service film 54 is wound (for example made of silicone-coated plastic, e.g., silicone-coated PET, as for example marketed under the name Silphan^{™}), wherein the first reel 121 is able to continuously unwind (e.g., by a suitable unwinding apparatus which comprises a motor and an actuator shaft which rotates for the continuous unwinding) the service film 54 on the conveyor belt 120 so that the continuous strip 31 in output from the extrusion head 118 lies on the service film 54. The service film 54 is exemplarily applied to the continuous strip 31 at the major base of the trapezium for allowing the handling of the sealing compound 10 (e.g., the winding on a deposit drum, the transportation, the deposition during the building phase, etc.).

Exemplarily the second plant 106 comprises a second reel 122 on which a structural film 55 (precursor of the aforesaid structural film 11) is wound, wherein the second reel 122 is able to continuously unwind (e.g., by a respective unwinding apparatus) the structural film 55 on the transport device 120 so that the structural film 55 adheres to the continuous strip 31 on the opposite side to the service film 54. The structural film 55 is exemplarily applied to the continuous strip 31 at the minor base of the trapezium. Exemplarily the second plant 106 comprises a third reel 123 and a fourth reel (not shown) on which a first and a second elongated element 56 made of an elastomeric compound (precursors of the aforesaid first and second elongated elements 13) are respectively wound, wherein the third reel 123 and the fourth reel are able to continuously unwind (e.g., by a respective unwinding apparatus) respectively the first and the second elongated element 56 on the transport device 120 so that the first and second elongated element 56 adhere to the continuous strip 31 at mutually opposite sides of the continuous strip 31 and at a respective oblique side of the trapezium.

Still with reference to figure 5, the second plant 106 exemplarily further comprises cooling means 124 for cooling the continuous strip 31, exemplarily after the application of the service film 54, of the structural film 55 and of the first and second elongated element 56. For example, the cooling of the continuous strip 31 occurs by blowing air at ambient temperature directly onto the continuous strip advancing on the conveyor belt 120.

Finally, the second plant 106 exemplarily further comprises a collection station 125, typically constituting the final machinery of the second plant 106, configured to wind on a collection reel 126 the continuous strip 31 with the service film 54, the structural film 55 and the first and second elongated element 56 applied thereon.

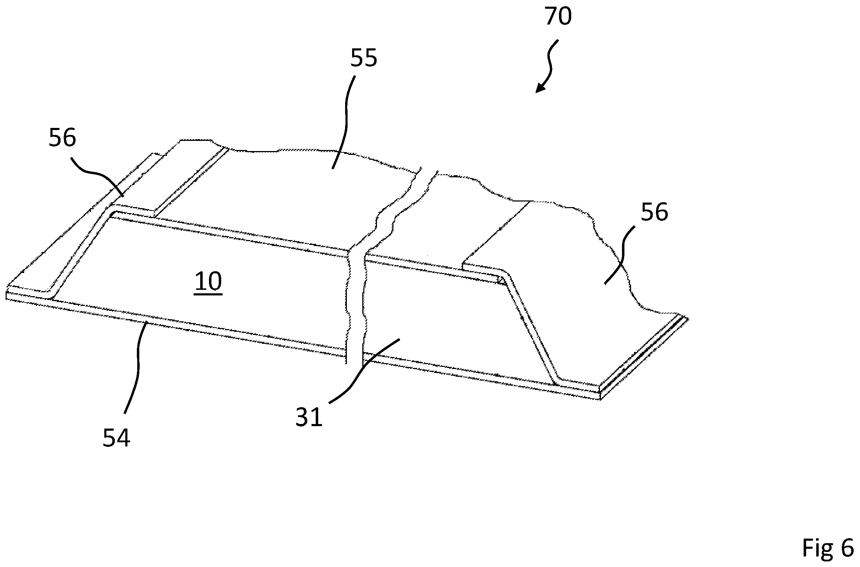

For the builing of the green tyre, the continuous strip 31, with the service film 54, the structural film 55 and the first and second elongated element 56 applied thereon, is exemplarily cut to size to obtain a semi-finished product 70 (schematically and partially shown in the figure 6) which constitutes a precursor of a sealing assembly formed by the layer of sealing compound 10, by the structural film 11 and by the first and second elongated element 13, as described above.

Exemplarily the making of the carcass structure 2 provides the winding of the semi-finished product 70 around a radially outer surface of a building drum, while keeping the structural film 55 in a radially more inner position. The service film 54 is exemplarily removed.

The building of the green tyre is preferably completed in the building station 102 by assembling further respective semi-finished products on one or more forming supports, not illustrated as for example known, and/or by continuous dispensing on the forming supports of the precursors which constitute the components of the tyre.

After the building of the green tyre 1, in the moulding and vulcanization station 103, the moulding and vulcanization is carried out for structurally stabilizing the self-sealing tyre 1 by cross-linking of the elastomeric compounds as well as to impress a desired tread pattern on the tread band 7. After the vulcanization, the layer of sealing compound 10 has the desired properties of deformability and stickiness (which can already be possessed by the continuous strip 31).

Further details on the composition of the sealing compound, on the machinery possibly used for its production, on the structure of a self-sealing tyre and on its building can be found in the aforesaid document WO2015/092574A1.

In one alternative (not shown) embodiment the green tyre is made without applying the semi-finished product 70. After the moulding abd vulcanization of the green tyre, the sealing compound is directly applied to the tyre in a radially inner position (typically only at the whole tread band) to obtain the layer of sealing compound 10, as for example described in US8821982B2. For example, the sealing compound is applied immediately after the output from the extrusion head 118 by continuous application in a plurality of juxtaposed turns, or in a single turn with width equal to the tread band. Exemplarily, before the application of the sealing compound, the tyre is heated (e.g., between 70°C and 100°C) to allow (or complete) the cross-linking of the sealing compound.

The Applicant has observed that should the production request for the second production site increase, it is possible to make changes to the production line and to the production process described above. In particular, the production of a second, numerically consistent, batch of further self-sealing tyres could take place entirely in the second production site.

Exemplarily in the second production site, in particular in the first part 106' of the aforesaid second plant 106, the extraction pumps 112 and 113 (as well as the lines A, M, A', M' and the dispensers 114 and 115) are replaced with a third continuous mixing device 170, for example a twin-screw extruder with intermeshing co-rotating screws such as the one described above with reference to the first mixing device 110. Exemplarily the third mixing device 170 is a Maris^{™} TM58HT co-rotating twin-screw mixing extruder, having diameter equal to 70mm and ratio between length L and diameter D equal to L/D=56. The working conditions of the twin-screw mixer 170 are for example: rotation speed of the screws 350rpm, pressure equal to 10bar.

This third mixing device 170 is advantageously placed upstream of, and coupled with structural continuity to, the aforesaid second mixing device 116. Downstream of the second mixing device 116, the structure of the second plant 106 remains unchanged, with the gear pump 117 and the extrusion head 118 coupled in series downstream of the second mixing device 116 as described above. At the output of the extrusion pump 118 the second part of the second plant 106 exemplarily remains unchanged.

The production of the second batch of further self-sealing tyres differs from what described above only for the production of the sealing compound, while the building of the green tyre and the moulding and vulcanization remain substantially unchanged with respect to what described above.

The production of the further sealing compound 36 comprises the continuous feeding of all the components of the sealing compound (styrene elastomer, diene elastomer, bonding resin, cross-linking agent, plasticizer, reinforcing filler, peptizer, etc.) to the third mixing device 170 which carries out a (examplarily distributive and dispersive) mixing of the components of the sealing compound for producing the complete further sealing compound.

At this point, the further sealing compound is continuously fed from the third mixing device 170 directly to the second mixing device 116 (which exemplarily now acts as a buffer device and therefore does not need to mix the materials), and subsequently, the further sealing compound is continuously fed from the second mixing device 116 to the gear pump 117 and to the extrusion head 118 to produce a continuous strip 36 of the further sealing compound having set transversal dimensions.

In other words, should the production request for the second production site increase, the aforesaid changes to the production line and to the production process allow to fully produce the sealing compound in the second production site.

## Claims

1. Production process of a self-sealing tyre (1) for vehicle wheels, said process comprising:
- producing a sealing compound (10) comprising at least one first elastomeric component, at least one bonding resin, and a cross-linking agent;
- building a green tyre;
- moulding and vulcanising said green tyre for obtaining said self-sealing tyre (1) comprising a layer of said sealing compound (10),
wherein producing said sealing compound (10) comprises:
a) feeding said first elastomeric component and said bonding resin to a first mixing device (110);
b) mixing said first elastomeric component and said bonding resin in said first mixing device (110) for producing a precursor compound (30) of said sealing compound, said precursor compound being substantially free of said cross-linking agent;
c) introducing said precursor compound (30) into a cask (90);
d) subsequently, extracting said precursor compound (30) from said cask (90);
e) continuously feeding said precursor compound (30) extracted from said cask (90) to a second mixing device (116) with a respective controlled feeding rate, said second mixing device (116) being continuous;
f) continuously feeding said cross-linking agent to said second mixing device (116) with a respective controlled feeding rate;
g) mixing said precursor compound (30) and said cross-linking agent in said second mixing device (116) for obtaining said sealing compound (10).

2. Process according to claim 1, comprising, subsequently to said operation g), extruding said sealing compound (10) for obtaining a continuous strip (31) of the sealing compound (10), wherein obtaining said continuous strip (31) of the sealing compound (10) comprises:
- continuously feeding the sealing compound (10) from said second mixing device (116) directly to a gear pump (117);
- continuously feeding the sealing compound (10) from said gear pump (117) directly to an extrusion head (118), so as to obtain in output from said extrusion head (118) said continuous strip (31) of the sealing compound (10).

3. Process according to claim 2, wherein subsequently to said extruding said sealing compound (10), the process comprises:
- applying a service film (54) to a first face of the continuous strip (31);
- applying a structural film (55) to a second face of the continuous strip (31) opposite to said first face;
- applying a first and a second elongated element (56) made of an elastomeric compound at respective opposite side of said continuous strip (31), each of said first and second elongated element (56) developing from said service film (54) to said structural film (55);
- cooling said continuous strip (31) together with said service film (54), said structural film (55) and said first and second elongated element (56);
- winding said continuous strip (31) together with said service film (54), said structural film (55) and said first and second elongated element (56) on a collection reel (126),the process comprising cutting at length said continuous strip (31) together with said service film (54), said structural film (55) and said first and second elongated element (56) for making a semi-finished product (70), wherein said building said green tyre comprises incorporating said semi-finished product (70) in the green tyre in a radially inner position of the green tyre for obtaining, after said moulding and vulcanizing, said layer of sealing compound (10) in said self-sealing tyre (1), and wherein, before incorporating said semi-finished product (70), the process comprises separating said service film (54) from said sealing compound (10).

4. Production process according to anyone of the preceding claims, comprising carrying out said operations from a) to c) in a first production site and carrying out said operations from d) to g) in a second production site different from said first production site.

5. Production process according to anyone of the preceding claims, wherein said mixing said first elastomeric component and said bonding resin in said first mixing device (110) occurs for distributive mixing and for dispersive mixing, wherein said mixing said precursor compound (30) and said cross-linking agent in said second mixing device (116) occurs for distributive mixing, and wherein said second mixing device (116) is a single-screw extruder with helical screw and wherein said mixing said precursor compound (30) and said cross-linking agent in said single-screw extruder comprises generating a back-flow at an end portion near to an outlet mouth of said single-screw extruder.

6. Production process according to anyone of the preceding claims, wherein said first pump (112) is a plate pressure pump comprising a plate (130) and a feeding duct (131), wherein, during said extracting said precursor compound (30) from said cask (90):
- a temperature of said plate (130) is greater than or equal to 140°C and less than or equal to 220°C;
- said cask (90) is kept at room temperature;
- said plate (130) is subjected to a pressure force greater than or equal to 50kN and less than or equal to 120 kN,
and wherein, during said extracting said precursor compound (30), said process comprises heating said feeding duct (131) of said plate pressure pump to a temperature greater than or equal to 100°C and less than or equal to 140°C.

7. Production process according to anyone of the preceding claims, wherein said first elastomeric component is a styrene thermoplastic elastomer or a diene elastomer, wherein said styrene thermoplastic elastomer is selected among: styrene/butadiene/styrene (SBS) block-copolymer, styrene/isoprene/styrene (SIS) block-copolymer, styrene/butadiene/isoprene/styrene (SBIS) block copolymer, and mixtures thereof, optionally comprising also the corresponding di-block thermoplastic elastomers, such as styrene-butadiene (SB) and styrene-isoprene (SI), wherein said sealing compound (10) comprises an amount of said styrene thermoplastic elastomer greater than or equal to 20 phr and less than or equal to 100 phr, wherein said diene elastomer is selected among: cis-1,4-polyisoprene, 3,4-polyisoprene, polybutadiene, isoprene/isobutene copolymers, that are possibly halogenated, 1,3-butadiene/acrylonitrile copolymer, styrene/1,3-butadiene copolymer, styrene/isoprene/1,3-butadiene copolymer, styrene/1,3-butadiene/acrylonitrile copolymer, or mixtures thereof, and wherein said sealing compound (10) comprises an amount of said diene elastomer less than or equal to 100 phr.

8. Process according to anyone of the preceding claims, wherein said bonding resin is selected from: hydrocarbon resins, phenolic-based resins, carbon-based resins, xylene-based resins, alkyl resins and natural resins, or mixtures thereof, and wherein said sealing compound (10) comprises an amount of said bonding resin greater than or equal to 20 phr and less than or equal to 200 phr, and wherein said cross-linking agent is an organic peroxide selected from: dicumyl peroxide (DCP), 2,5-dimethyl-2,5-di(t.butyl-peroxy)hexane (DBPH), bis-(2,4-dichlorobenzoyl) peroxide (DCBP), di-t.butylperoxide, wherein said cross-linking agent during said continuously feeding is dissolved in a liquid solvent, and wherein said sealing compound (10) comprises an amount of said cross-linking agent greater than or equal to 0.1 phr and less than or equal to 6 phr.

9. Production process of a first batch of self-sealing tyres (1) and of a second batch of further self-sealing tyres, comprising:
- producing said first batch of self-sealing tyres (1) according to anyone of the preceding claims, wherein said operations from a) to c) are carried out in a first plant (105) located in a first production site and said operations from d) to g) are carried out in a second plant (106) located in a second production site different from said first production site;
- subsequently, producing said second batch of further self-sealing tyres, wherein producing said second batch of further self-sealing tyres comprises, in said second production site:
- producing a further sealing compound (36) comprising at least said first elastomeric component, at least said bonding resin and said cross-linking agent;
- building a further green tyre;
- moulding and vulcanizing said further green tyre for obtaining said further self-sealing tyre comprising a layer of said further sealing compound (36),
wherein producing said further sealing compound (36) comprises:
- continuously feeding said first elastomeric component, said bonding resin and said cross-linking agent to a third mixing device (170), said third mixing device (170) being continuous;
- mixing said first elastomeric component, said bonding resin and said cross-linking agent in said third mixing device (170) for producing said further sealing compound (36),
the process comprising producing a continuous strip of the further sealing compound (36) by:
- continuously feeding the further sealing compound (36) from the third mixing device (170) directly to a buffer device placed downstream of, and coupled with structural continuity to, said third mixing device (170);
- continuously feeding the further sealing compound (36) from the buffer device to a further gear pump placed downstream of, and coupled with structural continuity to, said buffer device;
- continuously feeding the further sealing compound (36) from the further gear pump to a further extrusion head placed downstream of, and coupled with structural continuity to, said further gear pump, so as to obtain in output from said further extrusion head said continuous strip of the further sealing compound (36).

10. Production process according to claim 9, when depending on claim 2, wherein said buffer device coincides with said second mixing device (116) and/or said further gear pump coincides with said gear pump (117) and/or said further extrusion head coincides with said extrusion head (118).

11. Production line (100) of a self-sealing tyre (1) for vehicle wheels, said line comprising:
- a production station (101) of a sealing compound (10);
- a building station (102) of a green tyre;
- a moulding and vulcanizing station (103) of said green tyre for obtaining said self-sealing tyre (1) comprising a layer of said sealing compound (10),
wherein said production station (101) of the sealing compound (10) comprises:
- a first plant (105) comprising:
- a first mixing device (110) structured for mixing at least one first elastomeric component and at least one bonding resin for producing a precursor compound (30) of said sealing compound (10);
- a casking station (111) for introducing said precursor compound (30) into a cask (90),
- a second plant (106) comprising:
- a first feeding pump (112) structured for extracting said precursor compound (30) from said cask (90);
- a second feeding pump (113) structured for extracting a cross-linking agent from a container;
- a first metering device (114) and a second metering device (115) connected respectively to said first pump (112) and said second pump (113) and structured for controlling a respective feeding rate of, respectively, said precursor compound (30) and said cross-linking agent;
- a second mixing device (116) structured for receiving said respective feeding rate of said precursor compound (30) and of said cross-linking agent and for mixing said precursor compound (30) and said cross-linking agent for obtaining said sealing compound (10), said second mixing device (116) being continuous.

12. Line (100) according to claim 11, wherein said second plant (106) comprises:
- an extrusion head (118) placed downstream of said second mixing device (116) for extruding said sealing compound (10) and obtaining a continuous strip (31) of the sealing compound (10);
- a gear pump (117) placed downstream of, and coupled directly and with structural continuity to, said second mixing device (116),
said extrusion head (118) being placed downstream of, and coupled directly and with structural continuity to, said gear pump (117), wherein said second plant (106) comprises, downstream of said extrusion head (118):
- a conveying device (120) for receiving said continuous strip (31) and transporting it away from the extrusion head (118);
- a first reel (121) on which a service film (54) is wound, the first reel (121) being able to continuously unwind said service film (54) on the conveying device (120) so that said continuous strip (31) in output from the extrusion head (118) lays on said service film (54);
- a second reel (122) on which a structural film (55) is wound, the second reel (122) being able to continuously unwind said structural film (55) on the conveying device (120) so that said structural film (55) adheres to said continuous strip (31) on the opposite side with respect to said service film (54);
- a third reel (123) and a fourth reel on which a first and a second elongated element (56) made of an elastomeric compound are respectively wound, the third reel (123) and fourth reel being able to continuously unwind respectively said first and second elongated element (56) on the conveying device (120) so that each of said first and second elongated element (56) at least partially adheres to said continuous strip (31) on mutually opposite sides of said continuous strip (31);
- a collection station (125) placed downstream of the conveying device (120) and configured to wound said continuous strip (31) together with said service film (54), said structural film (55) and said first and second elongated element (56) on a collection reel (126);
- cooling means (124) for cooling said continuous strip (31) together with said service film (54), said structural film (55) and said first and second elongated element (56) between said extrusion head (118) and said collection station (126).

13. Line (100) according to anyone of claims from 11 to 12, wherein said first plant (105) is located in a first production site and said second plant (106) is located in a second production site different from said first production site.

14. Line (100) according to anyone of claims from 11 to 13, wherein said first mixing device (110) is continuous, wherein said first mixing device (110) is equipped with mixing portions able to give to the first elastomeric component a high shear stress, with redistribution portions, and also with conveying portions able to put in thrust the processed compound along an inner chamber of the first mixing device (110), and wherein said first mixing device (110) is of the type comprising at least two co-rotating or counter-rotating screws housed in the inner chamber, wherein said first pump (112) is a plate pressure pump comprising:
- a mobile plate (130) structured for hermetically sealing said cask (90) and, following a vertical downward movement, for pressing said precursor compound (30) for extracting it from said cask (90) through one or more openings at a lower face of said plate (130);
- a feeding duct (131) connected to said one or more openings of the plate (130) for receiving said precursor compound (30) extracted from said cask (90) and sending said precursor compound (30) to said first metering device (114) of the precursor compound (30).

15. Line (100) according to anyone of claims from 11 to 14, wherein said second mixing device (116) is a single-screw extruder with helical screw.

## Patentansprüche

1. Herstellungsverfahren für einen selbstdichtenden Reifen (1) für Fahrzeugräder, wobei das Verfahren umfasst:
- Herstellen einer Dichtungsmasse (10), die mindestens eine erste elastomere Komponente, mindestens ein Bindemittelharz und ein Vernetzungsmittel umfasst;
- Herstellung eines Rohreifens;
- Formgebung und Vulkanisieren des Rohreifens, um den selbstdichtenden Reifen (1) zu erhalten, der eine Schicht der Dichtungsmasse (10) umfasst,
wobei die Herstellung der Dichtungsmasse (10) Folgendes umfasst:
a) Zuführen der ersten elastomeren Komponente und des Bindemittelharzes zu einer ersten Mischvorrichtung (110);
b) Mischen der ersten elastomeren Komponente und des Bindemittelharzes in der ersten Mischvorrichtung (110), um eine Vorläuferverbindung (30) der Dichtungsmasse herzustellen, wobei die Vorläuferverbindung im Wesentlichen frei von dem Vernetzungsmittel ist;
c) Einbringen der Vorläuferverbindung (30) in ein Fass (90);
d) anschließendes Entnehmen der Vorläuferverbindung (30) aus dem Fass (90);
e) kontinuierliches Zuführen der aus dem Fass (90) entnommenen Vorläuferverbindung (30) zu einer zweiten Mischvorrichtung (116) mit einer entsprechend geregelten Zufuhrrate, wobei die zweite Mischvorrichtung (116) kontinuierlich arbeitet;
f) kontinuierliches Zuführen des Vernetzungsmittels zu der zweiten Mischvorrichtung (116) mit einer entsprechend geregelten Zufuhrrate;
g) Mischen der Vorläuferverbindung (30) und des Vernetzungsmittels in der zweiten Mischvorrichtung (116), um die Dichtungsmasse (10) zu erhalten.

2. Verfahren nach Anspruch 1, umfassend, im Anschluss an den Vorgang g), das Extrudieren der Dichtungsmasse (10), um einen Endlosstreifen (31) der Dichtungsmasse (10) zu erhalten, wobei das Erhalten des Endlosstreifens (31) der Dichtungsmasse (10) umfasst:
- kontinuierliches Zuführen der Dichtungsmasse (10) aus der zweiten Mischvorrichtung (116) direkt zu einer Zahnradpumpe (117);
- kontinuierliches Zuführen der Dichtungsmasse (10) aus der Zahnradpumpe (117) direkt zu einem Extruderkopf (118), um aus dem Extruderkopf (118) den Endlosstreifen (31) der Dichtungsmasse (10) zu erhalten.

3. Verfahren nach Anspruch 2, wobei nach dem Extrudieren der Dichtungsmasse (10) das Verfahren umfasst:
- Aufbringen einer Servicefolie (54) auf eine erste Seite des Endlosstreifens (31);
- Aufbringen einer Strukturfolie (55) auf eine zweite Seite des Endlosstreifens (31) gegenüber der ersten Seite;
- Aufbringen eines ersten und eines zweiten länglichen Elements (56) aus einer elastomeren Verbindung auf die jeweils gegenüberliegenden Seiten des Endlosstreifens (31), wobei sich jedes der ersten und zweiten länglichen Elemente (56) von der Servicefolie (54) zur Strukturfolie (55) erstreckt;
- Kühlen des Endlosstreifens (31) zusammen mit der Servicefolie (54), der Strukturfolie (55) und dem ersten und zweiten länglichen Element (56);
- Aufwickeln des Endlosstreifens (31) zusammen mit der Servicefolie (54), der Strukturfolie (55) und dem ersten und zweiten länglichen Element (56) auf eine Aufwickelrolle (126), wobei das Verfahren das Schneiden des Endlosstreifens (31) zusammen mit der Servicefolie (54), der Strukturfolie (55) und dem ersten und zweiten länglichen Element (56) umfasst, um ein Halbfertigprodukt (70) herzustellen, wobei das Herstellen des Rohreifens das Einarbeiten des Halbfertigprodukts (70) in den Rohreifen in einer radial inneren Position des Rohreifens umfasst, um nach dem Formen und Vulkanisieren die Dichtungsschicht (10) in dem selbstdichtenden Reifen (1) zu erhalten, und wobei das Verfahren vor dem Einbau des Halbfertigprodukts (70) das Trennen der Servicefolie (54) von der Dichtungsmasse (10) umfasst.

4. Herstellungsverfahren nach einem der vorstehenden Ansprüche, umfassend die Durchführung der Schritte a) bis c) an einem ersten Produktionsort und die Durchführung der Schritte d) bis g) an einem zweiten Produktionsort, der sich von dem ersten Produktionsort unterscheidet.

5. Herstellungsverfahren nach einem der vorstehenden Ansprüche, wobei das Mischen der ersten elastomeren Komponente und des Bindemittelharzes in der ersten Mischvorrichtung (110) zum distributiven Mischen und zum dispersiven Mischen erfolgt, wobei das Mischen der Vorläuferverbindung (30) und des Vernetzungsmittels in der zweiten Mischvorrichtung (116) zum Verteilungsmischen erfolgt, und wobei die zweite Mischvorrichtung (116) ein Einschneckenextruder mit einer schraubenförmigen Schnecke ist und wobei das Mischen der Vorläuferverbindung (30) und des Vernetzungsmittels in dem Einschneckenextruder das Erzeugen eines Rückflusses an einem Endteil in der Nähe einer Auslassöffnung des Einschneckenextruders umfasst.

6. Herstellungsverfahren nach einem der vorstehenden Ansprüche, wobei die erste Pumpe (112) eine Plattendruckpumpe ist, die eine Platte (130) und einen Zuführkanal (131) umfasst, wobei während des Extrahierens der Vorläuferverbindung (30) aus dem Fass (90):
- die Temperatur der Platte (130) größer oder gleich 140 °C und kleiner oder gleich 220 °C ist;
- das Fass (90) auf Raumtemperatur gehalten wird;
- die Platte (130) einer Druckkraft von größer oder gleich 50 kN und kleiner oder gleich 120 kN ausgesetzt wird,
und wobei während der Extraktion der Vorläuferverbindung (30) das Verfahren das Erhitzen des Zufuhrkanals (131) der Plattendruckpumpe auf eine Temperatur von größer oder gleich 100 °C und kleiner oder gleich 140 °C umfasst.

7. Herstellungsverfahren nach einem der vorstehenden Ansprüche, wobei die erste elastomere Komponente ein thermoplastisches Styrol-Elastomer oder ein Dien-Elastomer ist, wobei das thermoplastische Styrol-Elastomer ausgewählt ist aus: Styrol/Butadien/Styrol (SBS)-Block-Copolymer, Styrol/Isopren/Styrol (SIS)-Block-Copolymer, Styrol/Butadien/Isopren/Styrol (SBIS)-Block-Copolymer, und Mischungen davon, gegebenenfalls auch unter Einbeziehung der entsprechenden Diblock-Thermoplasten, wie Styrol-Butadien (SB) und Styrol-Isopren (SI), wobei die Dichtungsmasse (10) eine Menge des Styrol-Thermoplasten von größer oder gleich 20 phr und kleiner oder gleich 100 phr enthält, wobei das Dien-Elastomer ausgewählt ist aus: cis-1,4-Polyisopren, 3,4-Polyisopren, Polybutadien, Isopren/Isobutylen-Copolymeren, die möglicherweise halogeniert sind, 1,3-Butadien/Acrylnitril-Copolymer, Styrol/1,3-Butadien-Copolymer, Styrol/Isopren/1,3-Butadien-Copolymer, Styrol/1,3-Butadien/Acrylnitril-Copolymer oder Mischungen davon ausgewählt ist, und wobei die Dichtungsmasse (10) eine Menge des Dienelastomers von weniger als oder gleich 100 phr umfasst.

8. Verfahren nach einem der vorstehenden Ansprüche, wobei das Bindemittelharz ausgewählt ist aus: Kohlenwasserstoffharzen, Harzen auf Phenolbasis, Harzen auf Kohlenstoffbasis, Harzen auf Xylolbasis, Alkylharzen und Naturharzen oder Mischungen davon, und wobei die Dichtungsmasse (10) eine Menge des Bindemittelharzes von größer oder gleich 20 phr und kleiner oder gleich 200 phr umfasst, und wobei das Vernetzungsmittel ein organisches Peroxid ist, ausgewählt aus: Dicumylperoxid (DCP), 2,5-Dimethyl-2,5-di(t-butylperoxy)hexan (DBPH), Bis-(2,4-dichlorbenzoyl)peroxid (DCBP), Di-t- Butylperoxid, wobei das Vernetzungsmittel während der kontinuierlichen Zufuhr in einem flüssigen Lösungsmittel gelöst ist und wobei die Dichtungsmasse (10) eine Menge des Vernetzungsmittels von größer oder gleich 0,1 phr und kleiner oder gleich 6 phr umfasst.

9. Herstellungsverfahren einer ersten Charge selbstdichtender Reifen (1) und einer zweiten Charge weiterer selbstdichtender Reifen, umfassend:
- Herstellen der ersten Charge selbstdichtender Reifen (1) nach einem der vorstehenden Ansprüche, wobei die Schritte a) bis c) in einer ersten Anlage (105) durchgeführt werden, die sich an einem ersten Produktionsstandort befindet, und die Schritte d) bis g) in einer zweiten Anlage (106) durchgeführt werden, die sich an einem zweiten Produktionsstandort befindet, der sich von dem ersten Produktionsstandort unterscheidet;
- anschließendes Herstellen der zweiten Charge weiterer selbstdichtender Reifen, wobei das Herstellen der zweiten Charge weitere selbstdichtende Reifen an dem zweiten Produktionsstandort umfasst:
- Herstellen einer weiteren Dichtungsmasse (36), die mindestens die erste elastomere Komponente, mindestens das Bindemittelharz und das Vernetzungsmittel umfasst;
- Aufbauen eines weiteren Rohreifens;
- Formgebung und Vulkanisierung des weiteren Rohreifens, um den weiteren selbstdichtenden Reifen zu erhalten, der eine Schicht der weiteren Dichtungsmasse (36) umfasst,
wobei die Herstellung der weiteren Dichtungsmasse (36) umfasst:
- kontinuierliches Zuführen der ersten elastomeren Komponente, des Bindemittelharzes und des Vernetzungsmittels zu einer dritten Mischvorrichtung (170), wobei die dritte Mischvorrichtung (170) kontinuierlich arbeitet;
- Mischen der ersten elastomeren Komponente, des Bindemittelharzes und des Vernetzungsmittels in der dritten Mischvorrichtung (170) zur Herstellung der weiteren Dichtungsmasse (36),
der Prozess umfasst die Herstellung eines Endlosstreifens der weiteren Dichtungsmasse (36) durch:
- kontinuierliches Zuführen der weiteren Dichtungsmasse (36) aus der dritten Mischvorrichtung (170) direkt zu einer Puffervorrichtung, die stromabwärts von der dritten Mischvorrichtung (170) angeordnet und strukturell mit dieser verbunden ist;
- kontinuierliches Zuführen der weiteren Dichtungsmasse (36) von der Puffervorrichtung zu einer weiteren Zahnradpumpe, die stromabwärts von der Puffervorrichtung angeordnet und strukturell mit dieser verbunden ist;
- kontinuierliches Zuführen der weiteren Dichtungsmasse (36) von der weiteren Zahnradpumpe zu einem weiteren Extruderkopf, der stromabwärts von der weiteren Zahnradpumpe angeordnet und strukturell mit dieser verbunden ist, um aus dem weiteren Extruderkopf den Endlosstreifen der weiteren Dichtungsmasse (36) zu erhalten.

10. Herstellungsverfahren nach Anspruch 9, abhängig von Anspruch 2, wobei die Puffervorrichtung mit der zweiten Mischvorrichtung (116) übereinstimmt und/oder die weitere Zahnradpumpe mit der Zahnradpumpe (117) übereinstimmt und/oder der weitere Extruderkopf mit dem Extruderkopf (118) übereinstimmt.

11. Herstellungslinie (100) für einen selbstdichtenden Reifen (1) für Fahrzeugräder, wobei die Linie umfasst:
- eine Fertigungsstation (101) für eine Dichtungsmasse (10);
- eine Aufbaustation (102) für einen Rohreifen;
- eine Form- und Vulkanisationsstation (103) für den Rohreifen, um den selbstdichtenden Reifen (1) mit einer Schicht aus der Dichtungsmasse (10) herzustellen, wobei die Herstellungsstation (101) für die Dichtungsmasse (10) umfasst:
- eine erste Anlage (105), die umfasst:
- eine erste Mischvorrichtung (110), die zum Mischen mindestens einer ersten elastomeren Komponente und mindestens eines Bindungsharzes zum Herstellen einer Vorläuferverbindung (30) der Dichtungsmasse (10) ausgelegt ist;
- eine Abfüllstation (111) zum Einfüllen der Vorläuferverbindung (30) in ein Fass (90),
- eine zweite Anlage (106), die Folgendes umfasst:
- eine erste Förderpumpe (112), die zum Entnehmen der Vorläuferverbindung (30) aus dem Fass (90) ausgelegt ist;
- eine zweite Förderpumpe (113), die zum Entnehmen eines Vernetzungsmittels aus einem Behälter ausgelegt ist;
- eine erste Dosiervorrichtung (114) und eine zweite Dosiervorrichtung (115), die jeweils mit der ersten Pumpe (112) und der zweiten Pumpe (113) verbunden sind und so ausgelegt sind, dass sie die jeweilige Zufuhrrate der Vorläuferverbindung (30) bzw. des Vernetzungsmittels steuern;
- eine zweite Mischvorrichtung (116), die so ausgelegt ist, dass sie die jeweilige Zufuhrrate der Vorläuferverbindung (30) und des Vernetzungsmittels aufnimmt und die Vorläuferverbindung (30) und das Vernetzungsmittel mischt, um die Dichtungsmasse (10) zu erhalten, wobei die zweite Mischvorrichtung (116) kontinuierlich arbeitet.

12. Linie (100) nach Anspruch 11, wobei die zweite Anlage (106) umfasst:
- einen Extruderkopf (118), der stromabwärts der zweiten Mischvorrichtung (116) angeordnet ist, um die Dichtungsmasse (10) zu extrudieren und einen Endlosstreifen (31) der Dichtungsmasse (10) zu erhalten;
- eine Zahnradpumpe (117), die stromabwärts von der zweiten Mischvorrichtung (116) angeordnet und direkt und mit struktureller Kontinuität mit dieser verbunden ist,
wobei der Extruderkopf (118) stromabwärts von der Zahnradpumpe (117) angeordnet und direkt und mit struktureller Kontinuität mit dieser verbunden ist, wobei die zweite Anlage (106) stromabwärts des Extruderkopfes (118) umfasst:
- eine Fördervorrichtung (120) zum Aufnehmen des Endlosstreifens (31) und zum Transportieren desselben vom Extruderkopf (118) weg;
- eine erste Rolle (121), auf die eine Servicefolie (54) aufgewickelt ist, wobei die erste Rolle (121) in der Lage ist, die Servicefolie (54) kontinuierlich auf die Fördervorrichtung (120) abzuwickeln, so dass der Endlosstreifen (31) am Ausgang des Extruderkopfes (118) auf der Servicefolie (54) aufliegt;
- eine zweite Rolle (122), auf die eine Strukturfolie (55) aufgewickelt ist, wobei die zweite Rolle (122) in der Lage ist, die Strukturfolie (55) kontinuierlich auf die Fördervorrichtung (120) abzuwickeln, so dass die Strukturfolie (55) auf der gegenüberliegenden Seite in Bezug auf die Servicefolie (54) an dem Endlosstreifen (31) haftet;
- eine dritte Rolle (123) und eine vierte Rolle, auf denen jeweils ein erstes und ein zweites längliches Element (56) aus einer elastomeren Verbindung aufgewickelt sind, wobei die dritte Rolle (123) und die vierte Rolle in der Lage sind, das erste bzw. zweite längliche Element (56) kontinuierlich auf der Fördervorrichtung (120) kontinuierlich abwickeln können, so dass jedes der ersten und zweiten länglichen Elemente (56) zumindest teilweise an dem Endlosstreifen (31) aufeinander gegenüberliegenden Seiten des Endlosstreifens (31) haftet;
- eine Sammelstation (125), die stromabwärts der Fördervorrichtung (120) angeordnet und so konfiguriert ist, dass sie den Endlosstreifen (31) zusammen mit der Servicefolie (54), der Strukturfolie (55) und dem ersten und zweiten länglichen Element (56) auf eine Aufwickelrolle (126) aufwickelt;
- Kühlmittel (124) zum Kühlen des Endlosstreifens (31) zusammen mit der Servicefolie (54), der Strukturfolie (55) und dem ersten und zweiten länglichen Element (56) zwischen dem Extruderkopf (118) und der Sammelstation (126).

13. Linie (100) nach einem der Ansprüche 11 bis 12, wobei sich die erste Anlage (105) an einem ersten Produktionsstandort und die zweite Anlage (106) an einem zweiten Produktionsstandort befindet, der sich von dem ersten Produktionsstandort unterscheidet.

14. Linie (100) nach einem der Ansprüche 11 bis 13, wobei die erste Mischvorrichtung (110) kontinuierlich ist, wobei die erste Mischvorrichtung (110) mit Mischteilen ausgestattet ist, die der ersten elastomeren Komponente eine hohe Scherspannung verleihen können, mit Umverteilungsteilen und auch mit Förderteilen, welche die verarbeitete Mischung entlang einer inneren Kammer der ersten Mischvorrichtung (110) befördern, und wobei die erste Mischvorrichtung (110) mindestens zwei gleichläufige oder gegenläufige Schnecken umfasst, die in der inneren Kammer untergebracht sind, wobei die erste Pumpe (112) eine Plattendruckpumpe ist, umfassend:
- eine bewegliche Platte (130), die so konstruiert ist, dass sie das Fass (90) hermetisch abdichtet und nach einer vertikalen Abwärtsbewegung die Vorläuferverbindung (30) presst, um sie aus dem Fass (90) durch eine oder mehrere Öffnungen an einer Unterseite der Platte (130) zu extrahieren;
- einen Zuführkanal (131), der mit der einen oder den mehreren Öffnungen der Platte (130) verbunden ist, um die aus dem Fass (90) extrahierte Vorläuferverbindung (30) aufzunehmen und die Vorläuferverbindung (30) zur ersten Dosiervorrichtung (114) für die Vorläuferverbindung (30) zu leiten.

15. Linie (100) nach einem der Ansprüche 11 bis 14, wobei die zweite Mischvorrichtung (116) ein Einschneckenextruder mit einer spiralförmigen Schnecke ist.

## Revendications

1. Procédé de fabrication d'un pneu auto-obturant (1) pour roues de véhicules, ledit procédé comprenant :
- la production d'un composé d'étanchéité (10) comprenant au moins un premier composant élastomère, au moins une résine de liaison et un agent de réticulation ;
- la fabrication d'un pneu cru ;
- le moulage et la vulcanisation dudit pneu cru pour obtenir ledit pneu auto-obturant (1) comprenant une couche dudit composé d'étanchéité (10),
dans lequel la production dudit composé d'étanchéité (10) comprend :
a) l'alimentation dudit premier composant élastomère et de ladite résine de liaison dans un premier dispositif de mélange (110) ;
b) mélanger ledit premier composant élastomère et ladite résine de liaison dans ledit premier dispositif de mélange (110) pour produire un composé précurseur (30) dudit composé d'étanchéité, ledit composé précurseur étant sensiblement exempt dudit agent de réticulation ;
c) introduire ledit composé précurseur (30) dans un fût (90) ;
d) extraire ensuite ledit composé précurseur (30) dudit fût (90) ;
e) alimenter en continu ledit composé précurseur (30) extrait dudit fût (90) vers un deuxième dispositif de mélange (116) à un débit d'alimentation contrôlé respectif, ledit deuxième dispositif de mélange (116) étant continu ;
f) alimenter en continu ledit agent de réticulation vers ledit deuxième dispositif de mélange (116) à un débit d'alimentation contrôlé respectif ;
g) mélanger ledit composé précurseur (30) et ledit agent de réticulation dans ledit deuxième dispositif de mélange (116) pour obtenir ledit composé d'étanchéité (10).

2. Procédé selon la revendication 1, comprenant, à la suite de ladite opération g), l'extrusion dudit composé d'étanchéité (10) pour obtenir une bande continue (31) du composé d'étanchéité (10), dans lequel l'obtention de ladite bande continue (31) du composé d'étanchéité (10) comprend :
- l'alimentation en continu du composé d'étanchéité (10) depuis ledit deuxième dispositif de mélange (116) directement vers une pompe à engrenages (117) ;
- l'alimentation en continu du composé d'étanchéité (10) à partir de ladite pompe à engrenages (117) directement vers une tête d'extrusion (118), de manière à obtenir en sortie de ladite tête d'extrusion (118) ladite bande continue (31) du composé d'étanchéité (10).

3. Procédé selon la revendication 2, dans lequel, après ladite extrusion dudit composé d'étanchéité (10), le procédé comprend :
- l'application d'un film de service (54) sur une première face de la bande continue (31) ;
- l'application d'un film structurel (55) sur une deuxième face de la bande continue (31) opposée à ladite première face ;
- l'application d'un premier et d'un deuxième éléments allongés (56) constitués d'un composé élastomère sur les côtés opposés respectifs de ladite bande continue (31), chacun desdits premier et deuxième éléments allongés (56) s'étendant depuis ledit film de service (54) jusqu'audit film structurel (55) ;
- refroidir ladite bande continue (31) avec ledit film de service (54), ledit film structurel (55) et lesdits premier et deuxième éléments allongés (56) ;
- enrouler ladite bande continue (31) avec ledit film de service (54), ledit film structurel (55) et lesdits premier et deuxième éléments allongés (56) sur une bobine de collecte (126), le procédé comprenant la découpe à longueur de ladite bande continue (31) avec ledit film de service (54), ledit film structurel (55) et lesdits premier et deuxième éléments allongés (56) pour fabriquer un produit semi-fini (70), dans lequel ladite fabrication dudit pneu cru comprend l'incorporation dudit produit semi-fini (70) dans le pneu cru dans une position radialement intérieure du pneu cru pour obtenir, après ledit moulage et ladite vulcanisation, ladite couche de composé d'étanchéité (10) dans ledit pneu auto-obturant (1), et dans lequel, avant d'incorporer ledit produit semi-fini (70), le procédé comprend la séparation dudit film de service (54) dudit composé d'étanchéité (10).

4. Procédé de fabrication selon l'une quelconque des revendications précédentes, comprenant la réalisation desdites opérations de a) à c) dans un premier site de production et la réalisation desdites opérations de d) à g) dans un deuxième site de production différent dudit premier site de production.

5. Procédé de production selon l'une quelconque des revendications précédentes, dans lequel ledit mélange dudit premier composant élastomère et de ladite résine de liaison dans ledit premier dispositif de mélange (110) est effectué pour un mélange distributif et pour un mélange dispersif, dans lequel ledit mélange dudit composé précurseur (30) et dudit agent de réticulation dans ledit deuxième dispositif de mélange (116) est effectué pour un mélange distributif, et dans lequel ledit deuxième dispositif de mélange (116) est une extrudeuse à vis unique avec une vis hélicoïdale et dans lequel ledit mélange dudit composé précurseur (30) et dudit agent de réticulation dans ladite extrudeuse à vis unique comprend la génération d'un reflux à une partie d'extrémité proche d'une bouche de sortie de ladite extrudeuse à vis unique.

6. Procédé de production selon l'une quelconque des revendications précédentes, dans lequel ladite première pompe (112) est une pompe à pression à plaque comprenant une plaque (130) et un conduit d'alimentation (131), dans lequel, pendant ladite extraction dudit composé précurseur (30) dudit fût (90) :
- la température de ladite plaque (130) est supérieure ou égale à 140 °C et inférieure ou égale à 220 °C ;
- ledit fût (90) est maintenu à température ambiante ;
- ladite plaque (130) est soumise à une force de pression supérieure ou égale à 50 kN et inférieure ou égale à 120 kN,
et dans lequel, pendant ladite extraction dudit composé précurseur (30), ledit procédé comprend le chauffage dudit conduit d'alimentation (131) de ladite pompe à pression à plaque à une température supérieure ou égale à 100 °C et inférieure ou égale à 140 °C.

7. Procédé de production selon l'une quelconque des revendications précédentes, dans lequel ledit premier composant élastomère est un élastomère thermoplastique styrénique ou un élastomère diénique, dans lequel ledit élastomère thermoplastique styrénique est choisi parmi : un copolymère séquencé styrène/butadiène/styrène (SBS), un copolymère séquencé styrène/isoprène/styrène (SIS), un copolymère séquencé styrène/butadiène/isoprène/styrène (SBIS), et leurs mélanges, comprenant éventuellement également les élastomères thermoplastiques diblocs correspondants, tels que le styrène-butadiène (SB) et le styrène-isoprène (SI), dans lequel ledit composé d'étanchéité (10) comprend une quantité dudit élastomère thermoplastique styrénique supérieure ou égale à 20 phr et inférieure ou égale à 100 phr, dans lequel ledit élastomère diénique est choisi parmi : cis-1,4-polyisoprène, 3,4-polyisoprène, polybutadiène, copolymères isoprène/isobutène, qui sont éventuellement halogénés, copolymère 1,3-butadiène/acrylonitrile, copolymère styrène/1,3-butadiène, copolymère styrène/isoprène/1,3-butadiène, copolymère de styrène/1,3-butadiène/acrylonitrile, ou leurs mélanges, et dans lequel ledit composé d'étanchéité (10) comprend une quantité dudit élastomère diénique inférieure ou égale à 100 phr.

8. Procédé selon l'une quelconque des revendications précédentes, dans lequel ladite résine de liaison est choisie parmi : les résines hydrocarbonées, les résines à base de phénol, les résines à base de carbone, les résines à base de xylène, les résines alkyliques et les résines naturelles, ou leurs mélanges, et dans lequel ledit composé d'étanchéité (10) comprend une quantité de ladite résine de liaison supérieure ou égale à 20 phr et inférieure ou égale à 200 phr, et dans lequel ledit agent de réticulation est un peroxyde organique choisi parmi : le peroxyde de dicumyle (DCP), le 2,5-diméthyl-2,5-di(t-butylperoxy)hexane (DBPH), le peroxyde de bis-(2,4-dichlorobenzoyle) (DCBP), le di-t-butylperoxyde de bis(2,4-dichlorobenzoyle) (DCBP), le peroxyde de di-t-butyl-peroxyde de bis(2,4-dichlorobenzoyle) (DCBP), le peroxyde de di-t-butyl-peroxyde de bis(2,4-dichlorobenzoyle) (DCBP), le peroxyde de di-t-butyl-peroxyde de bis(2,4-dichlorobenzoyle) (DCBP), le peroxyde de di-t-butyl-peroxyde de bis(2,4-dichlorobenzoyle) (DCBP), le peroxyde de di-t-but butyl-peroxyde, dans lequel ledit agent de réticulation pendant ladite alimentation continue est dissous dans un solvant liquide, et dans lequel ledit composé d'étanchéité (10) comprend une quantité dudit agent de réticulation supérieure ou égale à 0,1 phr et inférieure ou égale à 6 phr.

9. Procédé de production d'un premier lot de pneus auto-obturants (1) et d'un deuxième lot d'autres pneus auto-obturants, comprenant :
- la production dudit premier lot de pneus auto-obturants (1) selon l'une quelconque des revendications précédentes, dans lequel lesdites opérations a) à c) sont effectuées dans une première usine (105) située dans un premier site de production et lesdites opérations d) à g) sont effectuées dans une deuxième usine (106) située dans un deuxième site de production différent dudit premier site de production ;
- ensuite, produire ledit deuxième lot de pneus auto-obturants supplémentaires, dans lequel la production dudit deuxième lot de pneus auto-obturants supplémentaires comprend, dans ledit deuxième site de production :
- la production d'un composé d'étanchéité supplémentaire (36) comprenant au moins ledit premier composant élastomère, au moins ladite résine de liaison et ledit agent de réticulation ;
- la fabrication d'un autre pneu cru ;
- le moulage et la vulcanisation dudit autre pneu cru pour obtenir ledit autre pneu auto-obturant comprenant une couche dudit autre composé d'étanchéité (36),
la production dudit autre composé d'étanchéité (36) comprenant :
- l'alimentation en continu dudit premier composant élastomère, de ladite résine de liaison et dudit agent de réticulation vers un troisième dispositif de mélange (170), ledit troisième dispositif de mélange (170) étant continu ;
- le mélange dudit premier composant élastomère, de ladite résine de liaison et dudit agent de réticulation dans ledit troisième dispositif de mélange (170) pour produire ledit autre composé d'étanchéité (36),
le procédé comprenant la production d'une bande continue dudit autre composé d'étanchéité (36) par :
- alimenter en continu le composé d'étanchéité supplémentaire (36) depuis le troisième dispositif de mélange (170) directement vers un dispositif tampon placé en aval dudit troisième dispositif de mélange (170) et couplé avec celui-ci de manière structurellement continue ;
- alimenter en continu le composé d'étanchéité supplémentaire (36) depuis le dispositif tampon vers une pompe à engrenages supplémentaire placée en aval dudit dispositif tampon et couplée avec celui-ci de manière structurellement continue ;
- alimenter en continu le composé d'étanchéité supplémentaire (36) à partir de la pompe à engrenages supplémentaire vers une tête d'extrusion supplémentaire placée en aval de ladite pompe à engrenages supplémentaire et couplée avec une continuité structurelle à celle-ci, de manière à obtenir en sortie de ladite tête d'extrusion supplémentaire ladite bande continue du composé d'étanchéité supplémentaire (36).

10. Procédé de production selon la revendication 9, lorsqu'il dépend de la revendication 2, dans lequel ledit dispositif tampon coïncide avec ledit deuxième dispositif de mélange (116) et/ou ladite autre pompe à engrenages coïncide avec ladite pompe à engrenages (117) et/ou ladite autre tête d'extrusion coïncide avec ladite tête d'extrusion (118).

11. Ligne de production (100) d'un pneu auto-obturant (1) pour roues de véhicules, ladite ligne comprenant :
- une station de production (101) d'un composé d'étanchéité (10) ;
- une station de fabrication (102) d'un pneu cru ;
- une station de moulage et de vulcanisation (103) dudit pneu cru pour obtenir ledit pneu auto-obturant (1) comprenant une couche dudit composé d'étanchéité (10), dans laquelle ladite station de production (101) du composé d'étanchéité (10) comprend :
- une première usine (105) comprenant :
- un premier dispositif de mélange (110) conçu pour mélanger au moins un premier composant élastomère et au moins une résine de liaison afin de produire un composé précurseur (30) dudit composé d'étanchéité (10) ;
- une station de mise en fût (111) pour introduire ledit composé précurseur (30) dans un fût (90),
- une deuxième usine (106) comprenant :
- une première pompe d'alimentation (112) conçue pour extraire ledit composé précurseur (30) dudit fût (90) ;
- une deuxième pompe d'alimentation (113) conçue pour extraire un agent de réticulation d'un récipient ;
- un premier dispositif de dosage (114) et un deuxième dispositif de dosage (115) connectés respectivement à ladite première pompe (112) et à ladite deuxième pompe (113) et conçus pour contrôler un débit d'alimentation respectif, respectivement, dudit composé précurseur (30) et dudit agent de réticulation ;
- un deuxième dispositif de mélange (116) conçu pour recevoir lesdits débits d'alimentation respectifs dudit composé précurseur (30) et dudit agent de réticulation et pour mélanger ledit composé précurseur (30) et ledit agent de réticulation afin d'obtenir ledit composé d'étanchéité (10), ledit deuxième dispositif de mélange (116) étant continu.

12. Ligne (100) selon la revendication 11, dans laquelle ladite deuxième usine (106) comprend :
- une tête d'extrusion (118) placée en aval dudit deuxième dispositif de mélange (116) pour extruder ledit composé d'étanchéité (10) et obtenir une bande continue (31) du composé d'étanchéité (10) ;
- une pompe à engrenages (117) placée en aval dudit deuxième dispositif de mélange (116) et couplée directement et avec une continuité structurelle à celui-ci, ladite tête d'extrusion (118) étant placée en aval de ladite pompe à engrenages (117) et couplée directement et avec une continuité structurelle à celle-ci, dans laquelle ladite deuxième usine (106) comprend, en aval de ladite tête d'extrusion (118) :
- un dispositif de transport (120) destiné à recevoir ladite bande continue (31) et à l'éloigner de la tête d'extrusion (118) ;
- une première bobine (121) sur laquelle est enroulé un film de service (54), la première bobine (121) étant capable de dérouler en continu ledit film de service (54) sur le dispositif de transport (120) de telle sorte que ladite bande continue (31) en sortie de la tête d'extrusion (118) repose sur ledit film de service (54) ;
- une deuxième bobine (122) sur laquelle est enroulé un film structurel (55), la deuxième bobine (122) étant capable de dérouler en continu ledit film structurel (55) sur le dispositif de transport (120) de manière à ce que ledit film structurel (55) adhère à ladite bande continue (31) sur le côté opposé par rapport audit film de service (54) ;
- une troisième bobine (123) et une quatrième bobine sur lesquelles sont respectivement enroulés un premier et un deuxième éléments allongés (56) constitués d'un composé élastomère, la troisième bobine (123) et la quatrième bobine étant capables de dérouler en continu respectivement lesdits premier et deuxième éléments allongés (56) sur le dispositif de transport (120) de manière à ce que chacun desdits premier et deuxième éléments allongés (56) adhère au moins partiellement à ladite bande continue (31) sur des côtés mutuellement opposés de ladite bande continue (31) ;
- une station de collecte (125) placée en aval du dispositif de transport (120) et configurée pour enrouler ladite bande continue (31) avec ledit film de service (54), ledit film structurel (55) et lesdits premier et deuxième éléments allongés (56) sur une bobine de collecte (126) ;
- des moyens de refroidissement (124) pour refroidir ladite bande continue (31) avec ledit film de service (54), ledit film structurel (55) et lesdits premier et deuxième éléments allongés (56) entre ladite tête d'extrusion (118) et ladite station de collecte (126).

13. Ligne (100) selon l'une quelconque des revendications 11 à 12, dans laquelle ladite première usine (105) est située dans un premier site de production et ladite deuxième usine (106) est située dans un deuxième site de production différent dudit premier site de production.

14. Ligne (100) selon l'une quelconque des revendications 11 à 13, dans laquelle ledit premier dispositif de mélange (110) est continu, dans laquelle ledit premier dispositif de mélange (110) est équipé de parties de mélange capables de soumettre le premier composant élastomère à une contrainte de cisaillement élevée, de parties de redistribution, ainsi que de parties de transport capables de pousser le composé traité le long d'une chambre interne du premier dispositif de mélange (110). et dans lequel ledit premier dispositif de mélange (110) est du type comprenant au moins deux vis co-rotatives ou contre-rotatives logées dans la chambre interne, dans lequel ladite première pompe (112) est une pompe à pression à plaque comprenant :
- une plaque mobile (130) structurée pour fermer hermétiquement ledit fût (90) et, à la suite d'un mouvement vertical vers le bas, pour presser ledit composé précurseur (30) afin de l'extraire dudit fût (90) à travers une ou plusieurs ouvertures situées sur une face inférieure de ladite plaque (130) ;
- un conduit d'alimentation (131) relié à ladite ou auxdites ouvertures de la plaque (130) pour recevoir ledit composé précurseur (30) extrait dudit fût (90) et envoyer ledit composé précurseur (30) vers ledit premier dispositif de dosage (114) du composé précurseur (30).

15. Ligne (100) selon l'une quelconque des revendications 11 à 14, dans laquelle ledit deuxième dispositif de mélange (116) est une extrudeuse à vis unique avec vis hélicoïdale.
